# FASCICULE DE BREVET EUROPEEN

(11) **EP 4 571 583 B1**
(45) Date de publication et mention de la délivrance du brevet: **12.08.2026**
(21) Numéro de dépôt: 24219837.2
(22) Date de dépôt: 13.12.2024
(51) Int. Cl.: G06N 3/0495, G06N 3/063, G06N 3/09, G06N 7/01

(54) **PROCÉDÉ D'APPRENTISSAGE AVEC ENTROPIE DIFFÉRENTIELLE DES POIDS SYNAPTIQUES D'UN RÉSEAU DE NEURONES, PROCÉDÉ DE TRAITEMENT, PROGRAMME D'ORDINATEUR, CALCULATEUR ET SYSTÈME DE TRAITEMENT ASSOCIÉS**
VERFAHREN ZUM LERNEN MIT DIFFERENTIELLER ENTROPIE DER SYNAPTISCHEN GEWICHTE EINES NEURONALEN NETZWERKS, VERARBEITUNGSVERFAHREN, COMPUTERPROGRAMM, COMPUTER UND VERARBEITUNGSSYSTEM DAFÜR
LEARNING METHOD WITH DIFFERENTIAL ENTROPY OF SYNAPTIC WEIGHTS OF A NEURAL NETWORK, PROCESSING METHOD, COMPUTER PROGRAM, ASSOCIATED COMPUTER AND PROCESSING SYSTEM

(30) Priorité: 15.12.2023 FR 2314326
(43) Date de publication de la demande: 18.06.2025
(73) Titulaire: Commissariat à l'Energie Atomique et aux Energies Alternatives, 75015 Paris (FR)
(72) Inventeur: METZ, Clément, 91191 GIF SUR YVETTE CEDEX (FR); BICHLER, Olivier, 91191 GIF SUR YVETTE CEDEX (FR); DUPRET, Antoine, 91191 GIF SUR YVETTE CEDEX (FR)
(74) Mandataire: Lavoix

(56) Documents cités:
- ENZO TARTAGLIONE ET AL: "HEMP: High-order Entropy Minimization for neural network comPression", ARXIV.ORG, CORNELL UNIVERSITY LIBRARY, 201 OLIN LIBRARY CORNELL UNIVERSITY ITHACA, NY 14853, 12 July 2021 (2021-07-12), XP091010864, DOI: 10.1016/J.NEUCOM.2021.07.022
- DUDA JAREK ET AL: "Asymmetric numeral systems: entropy coding combining speed of Huffman coding with compression rate of arithmetic coding", ARXIV.ORG, 6 January 2014 (2014-01-06), pages 1 - 24, XP093191125, Retrieved from the Internet <URL:https://arxiv.org/pdf/1311.2540> [retrieved on 20240730], DOI: 10.48550/arxiv.1311.2540

## Description

L'invention concerne le domaine de l'apprentissage de réseaux de neurones artificiels, aussi notés ANN (de l'anglais *Artificial Neural Networks*)*,* également appelés réseaux neuronaux. Les réseaux de neurones artificiels sont par exemple des réseaux de neurones convolutifs, aussi notés CNN (de l'anglais *Convolutional Neural Networks*)*,* des réseaux de neurones récurrents, tels que des réseaux récurrents à mémoire court-terme et long terme, également notés LTSM (de l'anglais *Long Short-Term Memory*)*,* ou encore des réseaux de neurones transformeurs (de l'anglais *Transformers*)*,* utilisés typiquement dans le domaine du traitement automatique des langues (TAL).

L'invention concerne aussi le domaine de calculateurs intégrés électroniques, également appelé puces, de mise en œuvre de tels réseaux de neurones, ces calculateurs électroniques permettant d'utiliser le réseau de neurones lors d'une phase d'inférence, après une phase préalable d'apprentissage du réseau de neurones à partir de données d'apprentissage, la phase d'apprentissage étant typiquement mise en œuvre par ordinateur.

Un réseau de neurones est généralement composé d'une succession de couches de neurones dont chacune prend ses entrées sur les sorties de la couche précédente. Plus précisément, chaque couche comprend des neurones et des synapses prenant leurs entrées sur les sorties des neurones de la couche précédente. Chaque couche est reliée à la suivante par une pluralité de synapses. Un poids synaptique est associé à chaque synapse. C'est un nombre ou encore une distribution, qui prend des valeurs positives comme négatives. Dans le cas d'une couche dense, l'entrée d'un neurone est la somme pondérée des sorties des neurones de la couche précédente, la pondération étant faite par les poids synaptiques et suivie d'une activation via une fonction d'activation.

De tels réseaux de neurones consomment d'importantes ressources mémoire et calculatoire pour leur stockage et leur inférence. Les ressources nécessaires peuvent être trop importantes pour permettre leur utilisation dans des systèmes embarqués.

Une technique connue permettant une diminution d'une empreinte mémoire lors de la phase d'apprentissage est basée sur la quantification du réseau. La quantification consiste à réduire le nombre de bits utilisés pour coder chaque poids synaptique, de sorte que l'empreinte mémoire totale soit réduite du même facteur. Cette quantification est définie par une fonction de quantification des poids synaptiques.

L'article *«* Entropy-Constrained Training of Deep Neural Networks » de S. Wiedemann et al décrit un procédé d'apprentissage du type précité, avec une quantification de précision fixe des poids synaptiques. A cet effet, le procédé d'apprentissage comprend une minimisation d'une entropie du réseau qui permet de mesurer notamment la complexité explicite du réseau en termes d'empreinte mémoire en bits, l'entropie étant mesurée par rapport à une probabilité empirique de la distribution des poids synaptiques.

Afin de minimiser l'entropie des poids du réseau, il est nécessaire de dériver un gradient de l'entropie par rapport aux paramètres du réseau. S. Wiedemann et al proposent alors d'utiliser une relaxation continue de l'entropie afin de la rendre différentiable.

Toutefois, un tel procédé ne donne pas entière satisfaction.

L'article « HEMP: High-order Entropy Minimization for neural network compression » de Enzo Tartaglione et al concerne l'apprentissage d'un réseau de neurones où les poids synaptiques sont quantifiés, l'apprentissage étant effectué en minimisant une fonction objectif J qui est égale à la somme d'une perte L et d'une fonction de régularisation R.

L'article « *Asymmetric numeral systems: entropy coding combining speed of Huffman coding with compression rate of arithmetic coding »* de Jarek Duda décrit un codage à systèmes numériques asymétriques (ANS).

Le but de l'invention est alors de proposer un procédé d'apprentissage d'un réseau de neurones permettant ensuite de réduire l'empreinte mémoire du réseau sans perte d'efficacité de traitement des données et de faciliter l'inférence dudit réseau de neurones par un calculateur.

A cet effet, l'invention a pour objet un procédé d'apprentissage selon la revendication 1.

Avec le procédé de l'état de la technique, la fonction obtenue après par relaxation continue est inutilisable en pratique, le procédé de l'état de la technique effectue alors des approximations bayésiennes pour obtenir la dérivée de la fonction obtenue. Ces approximations introduisent un aléa sur la quantification des poids.

Avec le procédé selon l'invention, la fonction de coût comporte aussi un terme entropique qui dépend de l'entropie différentielle totale des poids quantifiés. Cela permet alors de calculer plus simplement et plus efficacement le gradient de la fonction de coût. L'entropie différentielle totale forme une bonne approximation différentiable de l'entropie discrète. L'entropie différentielle évite alors d'introduire un aléa lié à une approximation bayésienne tout en réduisant l'empreinte mémoire du réseau.

Le procédé d'apprentissage selon l'invention permet alors déterminer les poids du réseaux de neurones en prenant en compte l'entropie des poids quantifiés, l'entropie étant par exemple mesurée par rapport à une probabilité empirique de la distribution des poids synaptiques.

De plus, minimiser l'entropie permet d'augmenter un potentiel de compression des poids lors d'une étape ultérieure optionnelle de compression, ce qui permet d'avoir un levier additionnel de réduction de l'empreinte mémoire du réseau.

Suivant d'autres aspects avantageux de l'invention, le procédé d'apprentissage est selon l'une quelconque des revendications 2 à 12.

L'invention a également pour objet un procédé de traitement de données selon la revendication 13.

L'invention concerne également un programme d'ordinateur selon la revendication 14.

L'invention a également pour objet un calculateur électronique selon la revendication 15.

Suivant d'autres aspects avantageux de l'invention, le calculateur est selon l'une quelconque des revendications 16 à 18.

L'invention a également pour objet un système électronique de traitement d'objet(s), selon la revendication 19.

L'invention apparaîtra plus clairement à la lecture de la description qui va suivre, donnée uniquement à titre d'exemple non limitatif, et faite en référence aux dessins dans lesquels :
- la figure 1 est une représentation schématique d'un système électronique de traitement d'objets selon l'invention, comprenant un capteur, et un calculateur électronique connecté au capteur, le calculateur étant configuré pour traiter, via la mise en œuvre d'un réseau de neurones artificiels, au moins un objet issu du capteur ;
- la figure 2 est une représentation schématique d'un ensemble de valeurs quantifiées sur 4 bits, utilisé pour l'apprentissage des poids du réseau de neurones selon l'invention ;
- la figure 3 est une représentation schématique d'une unité de décompression incluse dans le calculateur de la figure 1, l'unité de décompression configuré pour décompresser des poids quantifiés compressés par codage à systèmes numériques asymétriques en tableau (tANS) ;
- la figure 4 est un organigramme d'un procédé, selon l'invention, de traitement de données, notamment de classification de données, le procédé étant mis en œuvre par le calculateur électronique de la figure 1, implémentant le réseau de neurones artificiels ;
- la figure 5 est une représentation de la distribution des poids d'une couche de deux réseaux distincts de neurones, à savoir un premier réseau de neurones entrainé lors d'un apprentissage sans terme entropique et un deuxième réseau de neurones entrainé lors d'un apprentissage avec un terme entropique selon l'invention ;
- la figure 6 est une vue de plusieurs courbes obtenues avec un réseau de neurone entrainé selon l'invention pour différentes précisions de quantifications, chaque courbe représentant l'évolution d'une performance du réseau en fonction de l'entropie des poids du réseau pour une précision respective de quantification ;
- la figure 7 est un histogramme représentant la répartition du nombre de poids quantifiés distincts pour chaque couche d'un réseau de neurones ; et
- la figure 8 est une représentation de la répartition de l'empreinte mémoire par couche pour deux réseaux distincts, à savoir pour un réseau de neurones non compressé d'une part et pour un réseau de neurones compressé par codage à systèmes numériques asymétriques (ANS) d'autre part.

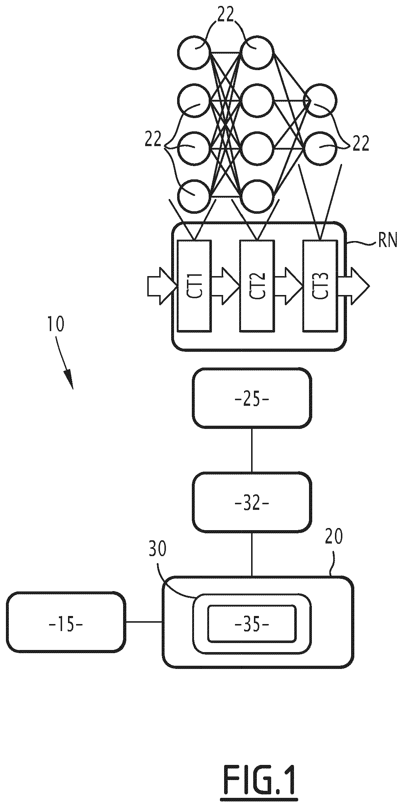

Sur la figure 1, un système électronique 10 de traitement d'objet(s) est configuré pour traiter un ou plusieurs objets, non représentés, et comprend un capteur 15 et un calculateur électronique 20 connecté au capteur 15, le calculateur 20 étant configuré pour traiter au moins un objet issu du capteur 15.

Le système électronique de traitement 10 est par exemple un système électronique de détection d'objet(s), le capteur 15 étant alors un détecteur d'objet(s) et le calculateur 20 étant configuré pour traiter au moins un objet détecté par le détecteur d'objet(s).

Le système électronique de traitement 10 forme par exemple un détecteur de visages apte à reconnaitre les visages de personnes préalablement identifiées et/ou à détecter des visages de personnes inconnues, c'est-à-dire des visages de personnes qui n'ont pas été préalablement identifiées. Le calculateur 20 permet alors d'apprendre les identités des personnes détectées, et aussi d'identifier des personnes inconnues.

Le capteur 15 est connu en soi. Le capteur 15 est par exemple un détecteur d'objet(s) configuré pour détecter un ou plusieurs objets, ou encore un capteur d'image(s) configuré pour prendre une ou plusieurs images d'une scène, et les transmettre au calculateur 20.

En variante, le capteur 15 est un capteur sonore, un capteur de détection d'objets, tel qu'un capteur lidar, un capteur radar, un capteur infrarouge, un capteur de proximité capacitif, un capteur de proximité inductif, un capteur de proximité à effet Hall ou encore un capteur de présence, configuré pour acquérir un signal caractéristique en fonction de la présence ou de l'absence d'objet(s), puis pour le transmettre au calculateur 20.

Le calculateur 20 est configuré pour traiter un ensemble de donnée(s), l'ensemble de donnée(s) correspondant typiquement à un ou plusieurs signaux captés par le capteur 15. Le calculateur 20 est alors typiquement configuré pour interpréter une scène captée par le capteur 15, c'est-à-dire pour identifier et/ou pour reconnaitre un type d'un ou plusieurs éléments - tels que personnes ou objets physiques - présents dans la scène captée et correspondants au signal ou aux signaux captés par le capteur 15.

Le calculateur 20 est configuré pour effectuer un traitement de données, notamment une classification de données, via la mise en œuvre d'un réseau RN de neurones artificiels, celui-ci comportant typiquement plusieurs couches de traitement successives CTi, où i est un indice entier supérieur ou égal à 1. Dans l'exemple de la figure 1, l'indice i est par exemple égal à 1, 2 et respectivement 3, avec des première CT1, deuxième CT2 et troisième CT3 couches de traitement représentées sur cette figure 1. Chaque couche de traitement respective CTi comporte, comme connu en soi, un ou plusieurs neurones artificiels 22, également appelés neurones formels.

Les couches de traitement CTi sont typiquement agencées de manière successive au sein du réseau de neurones RN, et les neurones artificiels 22 d'une couche de traitement donnée sont typiquement connectés à leur entrée aux neurones artificiels 22 de la couche précédente, et en sortie aux neurones artificiels 22 de la couche suivante. Les neurones artificiels 22 de la première couche, telle que la première couche de traitement CT1, sont connectés en entrée aux variables d'entrées, non représentées, du réseau de neurones RN, et les neurones artificiels 22 de la dernière couche de traitement, telle que la troisième couche de traitement CT3, sont connectés en sortie aux variables de sortie, non représentées, du réseau de neurones RN. Dans l'exemple de la figure 1, la deuxième couche de traitement CT2 forme alors une couche intermédiaire dont les neurones artificiels 22 sont connectés en entrée aux neurones artificiels 22 de la première couche de traitement CT1, et en sortie aux neurones artificiels 22 de la troisième couche de traitement CT3.

Comme connu en soi, à chaque neurone artificiel 22 est associée une opération, c'est-à-dire un type de traitement, à effectuer par ledit neurone artificiel 22 au sein de la couche de traitement correspondante. Chaque neurone artificiel 22 est typiquement apte à effectuer une somme pondérée de valeur(s) d'entrée, puis à appliquer une fonction d'activation à la somme pondérée pour délivrer une valeur de sortie, chaque valeur d'entrée étant reçue de la part d'un élément respectif connecté en entrée dudit neurone 22 et multiplié par un poids synaptique associé à la connexion entre ledit neurone 22 et l'élément respectif. L'élément respectif connecté en entrée dudit neurone 22 est une variable d'entrée du réseau de neurones RN lorsque ledit neurone appartient à une première couche, également appelée couche d'entrée, dudit réseau de neurones RN ; ou bien est un neurone d'une couche précédente du réseau de neurones RN lorsque ledit neurone appartient à une couche intermédiaire ou encore à une dernière couche, également appelée couche de sortie, du réseau de neurones RN. Comme connu en soi, la fonction d'activation, également appelée fonction de seuillage ou encore fonction de transfert, permet d'introduire une non-linéarité dans le traitement effectué par chaque neurone artificiel. Des exemples classiques d'une telle fonction d'activation sont la fonction sigmoïde, la fonction tangente hyperbolique, et la fonction de Heaviside, et la fonction d'unité de rectification linéaire, également appelée ReLU (de l'anglais *Rectified Linear Unit*)*.*

Le réseau de neurones RN est par exemple un réseau de neurones convolutifs, et les couches de traitement CT1, CT2, CT3 sont alors typiquement chacune choisies parmi le groupe consistant en : une couche de convolution, une couche de normalisation de batch, une couche de mise en commun, une couche de correction et une couche entièrement connectée (de l'anglais *fully connected*)*.*

Selon un premier aspect de l'invention, dans l'exemple de la figure 1, un module d'apprentissage 25, externe au calculateur 20, est configuré pour effectuer un apprentissage, également appelé entrainement, du réseau de neurones RN.

Dans l'exemple de la figure 1, le calculateur 20 comprend alors seulement un module d'inférence 30 configuré pour inférer le réseau de neurones RN préalablement entraîné, pour le traitement, notamment la classification, de données reçues en entrée du calculateur 20. Le calculateur 20 est alors configuré pour utiliser le réseau de neurones RN, préalablement entraîné, afin de calculer de nouvelles valeurs de sortie à partir de nouvelles valeurs d'entrée. En d'autres termes, il est configuré pour effectuer seulement l'inférence du réseau de neurones RN.

Le calculateur 20 est de préférence un calculateur embarqué, et est typiquement réalisé sous forme d'un processeur ou d'un microcontrôleur.

Dans l'exemple de la figure 1, le module d'apprentissage 25 est réalisé sous forme d'un logiciel, c'est-à-dire sous forme d'un programme d'ordinateur. Il est en outre apte à être enregistré sur un support, non représenté, lisible par ordinateur. Le support lisible par ordinateur est par exemple un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

Dans l'exemple de la figure 1, le module d'inférence 30 est réalisé sous forme d'un composant logique programmable, tel qu'un FPGA (de l'anglais *Field Programmable Gate Array*)*,* ou encore sous forme d'un circuit intégré dédié, tel qu'un ASIC (de l'anglais *Application Specific Integrated Circuit*)*.*

En variante, non représentée, le calculateur 20 comprend à la fois le module d'apprentissage 25 et le module d'inférence 30. Selon cette variante, le module d'apprentissage 25 et le module d'inférence 30 sont réalisés chacun sous forme d'un composant logique programmable, tel qu'un FPGA, ou encore sous forme d'un circuit intégré dédié, tel qu'un ASIC. Selon cette variante, le calculateur 20 est alors configuré pour effectuer à la fois l'apprentissage et l'inférence du réseau de neurones RN.

Le module d'apprentissage 25 est configuré pour effectuer l'apprentissage du réseau de neurones RN, notamment des valeurs de poids synaptique - également appelés poids synaptiques selon une terminologie plus courte - d'au moins une couche CT1, CT2, CT3 du réseau de neurones RN à partir de données d'apprentissage, et de préférence de chaque couche CT1, CT2, CT3 dudit réseau de neurones RN.

Par exemple, le module d'apprentissage 25 est configuré pour effectuer un algorithme de rétropropagation (de l'anglais *back-propagation*) du gradient.

Le module d'apprentissage 25 est en outre configuré pour effectuer la quantification desdits poids synaptiques par une fonction, dite quantificateur, chaque poids synaptique issu dudit apprentissage étant une valeur quantifiée appartenant à un ensemble EQ de valeurs quantifiées.

Par exemple, le quantificateur est défini tel que la valeur quantifiée d'un poids w_{i,j}, la valeur quantifiée étant notée ${w}_{i , j}^{q}$ vérifie l'équation suivante : ${w}_{i , j}^{q} = Quantize \left(\frac{1}{2}\times \left(\frac{{w}_{i , j}}{{max}_{r , s} \left|{w}_{r , s}\right|}+1\right)\right)$
où w_{i,j} est le j-ème poids de la i-ème couche de traitement CTi,
${w}_{i , j}^{q}$ est le j-ème poids quantifié de la i-ème couche de traitement CTi, et
max_{*r*,*s*}|*w_{r,s}*| représente la valeur maximale parmi les valeurs absolues des poids synaptiques.

Le quantificateur selon l'équation [1] est celui utilisé dans la méthode SAT, décrite dans l'article « *Towards Efficient Training for Neural Network Quantization* » de Q. Jin et al.

Dans la suite de la description, sauf autre précision, on entend par « poids », une valeur de poids synaptique et par « poids quantifié », une valeur quantifiée de poids synaptique.

Le réseau de neurones RN comprend une pluralité de groupes Wᵢ de poids quantifiés du réseau, chaque groupe Wᵢ comprenant au moins un poids quantifié appartenant à l'ensemble EQ. Un groupe Wᵢ est par exemple une couche CTi du réseau de neurones RN.

Dans la suite de la description, la notation W correspond à un groupe quelconque Wᵢ. En d'autres termes, l'indice i n'est pas précisé quand la caractéristique décrite est applicable à chacun des groupes Wᵢ.

Dans chaque groupe W, la répartition des poids quantifiés suit une variable aléatoire discrète $X$ de loi de probabilité empirique.

A chaque groupe W de poids quantifiés est associé un paramètre de précision λ_{W} égal au nombre de bits utilisés pour le codage de l'au moins un poids quantifié du groupe W respectif.

Les données d'apprentissage comprennent un ensemble de données d'exemples utilisées pendant le processus d'apprentissage. Les données comprennent une pluralité d'entrées Xi, chaque entrée Xi étant associée à un label Yi, qui est par exemple un nombre binaire ou un réel. Une entrée Xi est par exemple un vecteur comprenant n valeurs correspondant à des caractéristiques connues.

L'apprentissage a pour but de déterminer des poids synaptiques qui permettent de prédire au mieux la valeur des labels Yi à partir des valeurs d'entrées Xi correspondantes.

A cet effet, le module d'apprentissage 25 est configuré pour déterminer les poids par minimisation d'une fonction de coût L. La fonction de coût L dépend d'un terme d'erreur L^{cls} correspondant à une erreur de prédiction et d'un terme entropique.

Le module d'apprentissage 25 est en outre configuré pour calculer le gradient de la fonction de coût L.

Par exemple, la fonction de coût L est la somme du terme d'erreur L^{cls} correspondant à une erreur de prédiction et du terme entropique.

Le terme d'erreur L^{cls} mesure l'écart entre des prédictions Y'i du réseau de neurones RN à partir des poids déterminés et des entrées Xi et la véritable valeur de labels Yi des données d'apprentissage.

Le terme d'erreur L^{cls} est par exemple l'entropie croisée entre les prédictions Y'i et les labels Yi.

Le terme entropique dépend d'une entropie différentielle totale Hₜₒₜ des poids quantifiés.

Le terme entropique est par exemple le produit d'un facteur multiplicatif κ et d'une fonction d'objectif entropique L^{entropy}, la fonction d'objectif entropique L^{entropy} dépendant de l'entropie différentielle totale Hₜₒₜ des poids quantifiés.

La fonction de cout L vérifie alors typiquement l'équation suivante : $L = {L}^{cls} + κ . {L}^{entropy}$
où L représente la fonction de coût,
L^{cls} représente le terme d'erreur,
κ représente le facteur multiplicatif, et
L^{entropy} représente la fonction d'objectif entropique.

Par exemple, le facteur κ prend une valeur fixe tout au long de l'entrainement, de préférence sensiblement égale à 0.1.

En variante, le facteur κ prend une valeur progressive qui croit linéairement durant une première partie de l'entrainement jusqu'à une valeur seuil, puis garde la valeur seuil durant le reste de l'entrainement. La croissance linéaire est par exemple configurée pour avoir lieu pour les vingt premières itérations d'apprentissage, les itérations d'apprentissage étant également appelées époques (de l'anglais *epoch*)*.* La croissance linéaire est par exemple configurée pour avoir lieu pour les vingt premières époques de l'algorithme de rétropropagation.

La fonction d'objectif entropique L^{entropy} dépend de préférence en outre d'un objectif entropique total Ĥ prédéfini.

En particulier, la fonction d'objectif entropique L^{entropy} dépend d'une différence entre l'entropie différentielle totale Hₜₒₜ et l'objectif entropique total Ĥ.

Selon un exemple de réalisation, les paramètres de précision λ_{W} sont des entiers. L'entropie différentielle totale Hₜₒₜ est alors une somme de produits pour les groupes W, chaque produit étant un produit d'un cardinal |W| d'un groupe W respectif et de l'entropie différentielle H_{W} dudit groupe.

L'entropie différentielle totale Hₜₒₜ vérifie alors l'équation suivante : ${H}_{tot} = {\sum }_{W} \left|W\right| {H}_{W}$
où Hₜₒₜ est l'entropie différentielle totale des poids quantifiés,
|W| est le cardinal du groupe W, i.e. le nombre de poids inclus dans le groupe W,
H_{W} est l'entropie différentielle du groupe W.

Par exemple, la fonction d'objectif entropique L^{entropy} vérifie l'équation : ${L}^{entropy} = \frac{\left|{\sum }_{W} \left|W\right| \times {H}_{W} - \hat{H}\right|}{\hat{H}}$
où L^{entropy} est la fonction d'objectif entropique,
|W| est le cardinal du groupe W,
H_{W} est l'entropie différentielle du groupe W, et
Ĥ est l'objectif entropique total.

L'entropie différentielle H_{W} étend le concept de l'entropie de Shannon aux lois de probabilité continues. L'entropie différentielle H_{W} est par exemple l'entropie binaire différentielle des poids du groupe W.

La loi de probabilité empirique de la variable aléatoire discrète $X$ des poids quantifiés pour chaque groupe W étant discrète, l'entropie différentielle H_{W} correspond donc à une approximation de l'entropie de Shannon de la variable aléatoire discrète des poids quantifiés pour chaque groupe W. La démonstration de la validité de cette approximation sera décrite plus tard.

La variable aléatoire discrète $X$ des poids quantifiés correspond effectivement à l'arrondi d'une variable aléatoire continue X qui suit une loi de probabilité continue. Cette loi de probabilité continue est utilisée pour le calcul de l'entropie différentielle H_{W}.

Dans la suite de description, on entend par le terme « entropie », l'entropie de Shannon.

Dans le cas particulier où les poids de chaque groupe W suivent une variable aléatoire discrète $X$ correspondant à l'arrondi de la variable aléatoire continue X suivant une loi normale de variance V(X) et d'espérance E(X), le module d'apprentissage 25 est configuré pour calculer la dérivée par rapport au(x) poids de chaque groupe W respectif de la fonction d'objectif entropique L^{entropy}, telle que définie par l'équation [4], par exemple selon l'équation suivante : $\begin{matrix}\frac{\partial {L}^{entropy}}{\partial W} = \frac{\frac{\partial V \left(W\right)}{\partial W}}{2 ln \left(2\right) V \left(W\right) \hat{H}} \\ ⇔ \frac{\partial {L}^{entropy}}{\partial W} = \frac{\frac{\partial \left(E\left({W}^{2}\right)-E{\left(W\right)}^{2}\right)}{\partial W}}{2 ln \left(2\right) V \left(W\right) \hat{H}} \\ ⇔ \frac{\partial {L}^{entropy}}{\partial W} = \frac{W - E \left(W\right)}{n . ln \left(2\right) V \left(W\right) \hat{H}}\end{matrix}$
où L^{entropy} est la fonction d'objectif entropique,
V(W) est la variance de la deuxième variable aléatoire continue X du groupe W respectif,
E(W) est l'espérance de la deuxième variable aléatoire continue X du groupe W respectif,
Ĥ est l'objectif entropique total, et
n est le nombre de poids quantifiés du groupe W.

En variante, les paramètres de précision λ_{W} sont des réels positifs. La fonction d'objectif entropique L^{entropy} dépend alors en outre des paramètres de précision λ_{W}.

En particulier, la fonction d'objectif entropique L^{entropy} vérifie l'équation suivante : ${L}^{entropy} = \frac{\left|{\sum }_{W} \left|W\right| \left(\left(1-{λ}_{W}+\left⌊{λ}_{W}\right⌋\right){H}_{W \left(\left⌊{λ}_{W}\right⌋\right)}+\left({λ}_{W}-\left⌊{λ}_{W}\right⌋\right){H}_{W \left(\left⌈{λ}_{W}\right⌉\right)}\right) - \hat{H}\right|}{\hat{H}}$
où L^{entropy} est la fonction d'objectif entropique,
λ_{W} est le paramètre de précision du groupe W respectif,
Ĥ est l'objectif entropique total,
H_{W(k)} est l'entropie des poids quantifiés à la précision k,
$\left⌊.\right⌋$ représente la partie entière, aussi appelée partie entière inférieure (de l'anglais *floor,* ou plancher en français), et
$\left⌈.\right⌉$ représente la partie entière supérieure (de l'anglais *ceiling,* ou plafond en français).

Cette variante permet de fournir les précisions de quantification optimales par groupe W minimisant l'entropie des poids.

Avantageusement, le module d'apprentissage 25 est en outre configuré pour calculer la dérivée par rapport au paramètre de précision λ_{W} de la fonction d'objectif entropique L^{entropy}, par exemple selon l'équation suivante : $\frac{\partial {L}^{entropy}}{\partial {λ}_{W}} = \frac{\left|W\right|}{\hat{H}} \left({H}_{W \left(\left⌈{λ}_{W}\right⌉\right)}-{H}_{W \left(\left⌊{λ}_{W}\right⌋\right)}\right)$
où L^{entropy} représente la fonction d'objectif entropique,
λ_{W} représente le paramètre de précision du groupe respectif,
W représente le groupe respectif de poids,
H_{W} représente l'entropie différentielle du groupe W,
Ĥ représente l'objectif entropique totale,
$\left⌊.\right⌋$ représente la partie entière inférieure, et
$\left⌈.\right⌉$ représente la partie entière supérieure.

Selon un complément facultatif, le module d'apprentissage 25 est configuré pour effectuer l'apprentissage des poids à partir de données d'apprentissage, chaque poids issu dudit apprentissage étant une valeur quantifiée de poids appartenant à l'ensemble EQ de valeurs quantifiées, l'ensemble EQ incluant un nombre impair de valeurs.

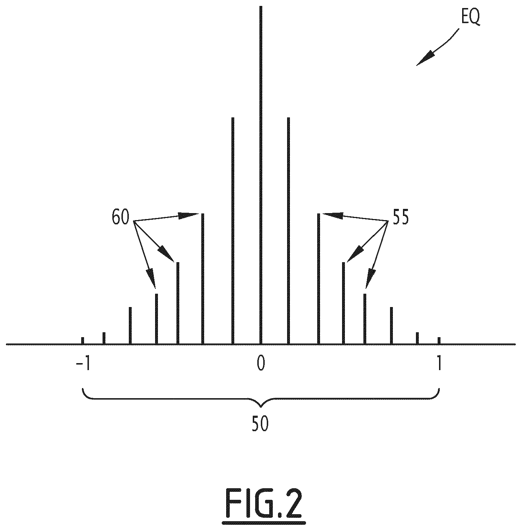

En variante de ce complément facultatif, en référence à la figure 2, l'ensemble EQ inclut la valeur nulle.

Dans l'exemple de la figure 2, la répartition 50 des valeurs quantifiées est telle que les valeurs quantifiées positives 55 de l'ensemble EQ sont symétriques des valeurs quantifiées négatives 60 par rapport à la valeur nulle.

La valeur nulle capte une très grande portion des poids de par la distribution naturelle des poids. Ainsi, l'ajout de la valeur nulle contribue à réduire l'entropie des poids quantifiés. La symétrie par rapport à la valeur nulle permet une distribution proche d'une loi normale arrondie.

Selon un second aspect complémentaire et indépendant du premier aspect, le système électronique comprend en outre un module de compression 32, illustré sur la figure 1, configuré pour compresser les poids quantifiés déterminés par le module d'apprentissage 25.

Dans l'exemple de la figure 1, le module de compression 32 est externe au calculateur 20 et au module d'apprentissage 25.

Le module de compression 32 est par exemple réalisé sous forme d'un logiciel, c'est-à-dire sous forme d'un programme d'ordinateur. Il est en outre apte à être enregistré sur un support, non représenté, lisible par ordinateur. Le support lisible par ordinateur est par exemple un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

En variante, le module de compression 32 est réalisé sous forme d'un composant logique programmable, tel qu'un FPGA (de l'anglais *Field Programmable Gate Array*)*,* ou encore sous forme d'un circuit intégré dédié, tel qu'un ASIC (de l'anglais *Application Specific Integrated Circuit).*

En variante, non représentée, le module de compression 32 est inclus au calculateur 20 et/ou au module d'apprentissage 25.

Par exemple, le module de compression 32 est configuré pour réaliser un codage entropique des poids quantifiés.

Le module de compression 32 est configuré pour fournir en sortie une chaine de bits 68 représentant le(s) poids quantifié(s) d'un groupe W.

Par exemple, le codage entropique est un codage à systèmes numériques asymétriques, également appelé codage ANS (de l'anglais *Asymmetric Numeral Systems*)*,* dont le fonctionnement est connu en soi, par exemple de l'article intitulé *«* Asymmetric numeral systems: entropy coding combining speed of Huffman coding with compression rate of arithmetic coding » de J. Duda, publié en 2014.

Néanmoins, un tel codage entropique n'a jamais été utilisé pour la compression de paramètres, tels que des poids synaptiques, de réseaux de neurones.

Selon ce deuxième aspect de l'invention, les symboles à encoder sont les valeurs de quantification des poids, i.e. les poids quantifiés.

De préférence, le codage entropique est un codage à systèmes numériques asymétriques en tableau, également appelé codage tANS (de l'anglais *tabled Asymmetric Numeral Systems*)*.* Le module de compression 32 est configuré pour associer au moins un état E à chaque valeur quantifiée de poids.

Par exemple, le nombre l d'état(s) E encodant n valeur quantifiées vérifie l'équation suivante : $l = {2}^{b} n$
où l est le nombre d'état(s) E,
n le nombre de valeurs quantifiées, et
b est un entier.

De préférence, le nombre d'état(s) E affecté(s) à une valeur quantifiée dépend de la probabilité de cette valeur quantifiée. En d'autres termes, plus une valeur quantifiée est déterminée parmi un groupe W, plus d'états E lui seront associés.

Selon ce second aspect de l'invention, le module d'inférence 30 comprend une unité de décompression 35 configurée pour décompresser les poids compressés. Par exemple, l'unité de décompression 35 est configurée pour effectuer un décodage entropique des poids compressés.

L'unité de décompression 35 prend en entrée la chaine de bits 68, fournie en sortie du module de compression 32, et un état initial E₁.

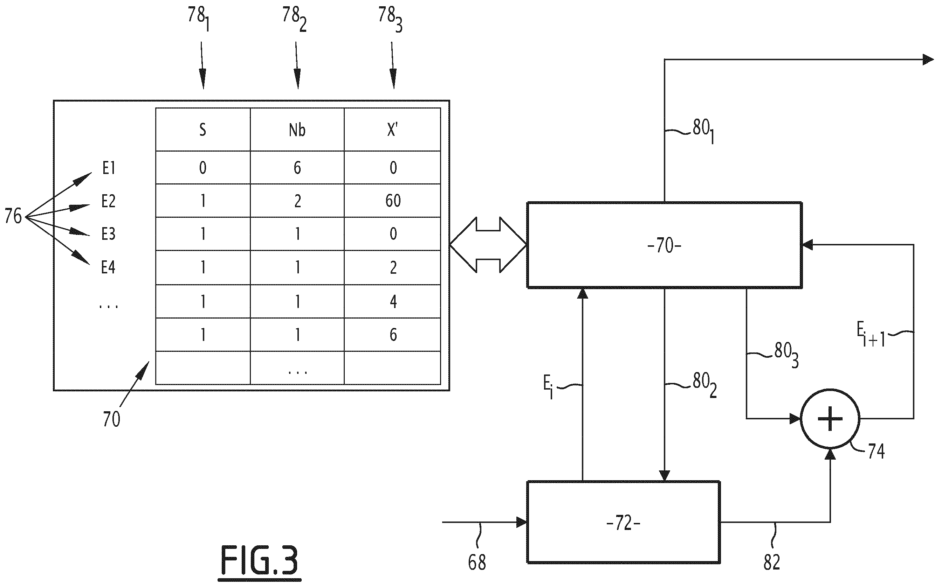

Dans le cas où le codage entropique est le codage tANS, l'unité de décompression 35, illustrée sur la figure 3, comprend une table de consultation 70, également appelée table LUT (de l'anglais *Look-Up Table*)*.* La table de consultation 70 forme une table de décodage du codage tANS.

Dans l'exemple de la figure 3, l'unité de décompression 35 comprend en outre un accumulateur 72 et un additionneur 74.

La table de consultation 70 comprend l lignes 76 correspondant au l états E encodés par le module de compression 32, chaque ligne 76 correspondant à un état Eᵢ, et trois colonnes 78. Une première colonne 78₁ comprend un symbole S, c'est-à-dire le poids quantifié correspondant à l'état Eᵢ. Une seconde colonne 78₂ comprend le nombre de bits Nb à la lire dans la chaine de bits 68 à décoder selon l'état Eᵢ. Une troisième colonne 78₃ correspond à un entier X' nécessaire pour calculer l'état suivant Eᵢ₊₁.

La table de consultation 70 est configurée pour prendre en entrée l'état Eᵢ et émettre en sortie trois signaux 80ᵢ. Un premier signal 80₁ est représentatif du symbole S contenu dans la première colonne 78₁ de l'état Eᵢ. Un deuxième signal 80₂ est représentatif du nombre de bits Nb à lire dans la chaine de bits 68, contenu dans la deuxième colonne 78₂. Un troisième signal 80₃ est représentatif de l'entier X' nécessaire pour calculer l'état suivant Eᵢ₊₁ selon la troisième colonne 78₃.

L'accumulateur 72 est configuré pour transformer le deuxième signal 80₂ en un signal 82 représentatif des bits lus dans la chaine de bits 68, le nombre de bits lus dépendant du deuxième signal 80₂.

L'additionneur 74 est configuré pour prendre en entrée le troisième signal 80₃ et le signal 82, et pour calculer alors l'état suivant Eᵢ₊₁.

En variante, non représentée, l'additionneur 74 n'est pas présent. La table de consultation 70 comprend alors plus de colonnes 78. Les colonnes 78 additionnelles comprennent directement les différentes valeurs d'état suivant Eᵢ₊₁. Dans ce cas, l'empreinte mémoire nécessaire au codage de la table de consultation 70 est plus importante qu'en présence de l'additionneur 74.

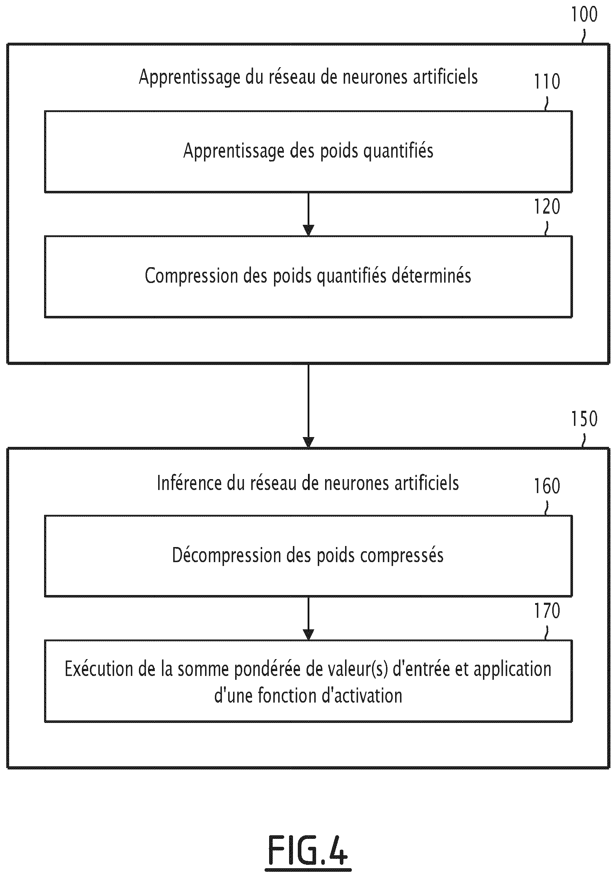

Un exemple de fonctionnement du calculateur 20 selon l'invention va maintenant être expliqué en regard de la figure 4 représentant un organigramme d'un procédé de traitement de données issues du capteur 15, notamment de classification de données, via l'implémentation du réseau de neurones artificiels RN avec le calculateur 20, le procédé comprenant une phase d'apprentissage 100 dans laquelle un procédé, selon l'invention, d'apprentissage de poids synaptiques d'au moins une couche CT1, CT2, CT3 du réseau de neurones RN est mis en œuvre ; puis une phase d'inférence 150 dans laquelle le réseau de neurones artificiels RN, préalablement entraîné, est utilisé pour calculer des valeurs de sortie, afin de traiter, notamment de classifier, i.e. classer, lesdites données.

Comme décrit précédemment, la phase d'apprentissage 100 est de préférence mise en œuvre par un ordinateur, cette phase d'apprentissage 100 étant effectuée par le module d'apprentissage 25, et optionnellement le module de compression 32, qui sont typiquement des modules logiciels. La phase d'inférence 150 subséquente est, quant à elle, de préférence mise en œuvre par le calculateur 20, et plus précisément par son module d'inférence 30. En particulier, la phase d'apprentissage 100 selon l'invention permet ensuite une mise en œuvre de la phase d'inférence 150.

La phase d'apprentissage 100 comprend une étape 110 d'apprentissage du réseau de neurones RN, en particulier de poids quantifiés dudit réseau.

L'étape 110 d'apprentissage est effectuée par le module d'apprentissage 25.

L'étape 110 d'apprentissage est effectuée à partir des données d'apprentissage. Cet apprentissage est effectué via un algorithme de rétropropagation (de l'anglais *back-propagation*) du gradient.

L'algorithme de rétropropagation a pour but de converger vers une configuration optimale des poids synaptiques, obtenue par minimisation de la fonction de coût L.

Selon l'invention, la fonction de coût L dépend d'un terme d'erreur L^{cls} correspondant à l'erreur de prédiction et du terme entropique, le terme entropique dépend de l'entropie différentielle totale Hₜₒₜ des poids quantifiés.

L'étape 110 d'apprentissage comprend ensuite la quantification des poids obtenus par application du quantificateur. Chaque poids déterminé est une valeur quantifiée appartenant à l'ensemble prédéfini EQ de valeurs quantifiées.

Lors de la phase d'apprentissage 100, à l'issue de l'étape d'apprentissage 110, le module de compression 32 effectue optionnellement ensuite une étape de compression 120 des poids quantifiés.

La compression est par exemple réalisée via le codage entropique, de préférence via le codage ANS. Avantageusement, la compression est réalisée via le codage tANS.

Lors de la phase d'inférence 150, le module d'inférence 30 infère le réseau de neurones artificiels RN préalablement entrainé pour traiter, notamment classifier, les données reçues en entrée du calculateur électronique 20, le réseau de neurones RN ayant été préalablement entraîné et compressé lors de la phase d'apprentissage 100.

Les données reçues par le calculateur 20 correspondent aux données captées par le capteur 15.

La phase d'inférence 150 comprend une première étape 160 de décompression des poids compressés, effectuée par l'unité de décompression 35 incluse dans le module d'inférence 30.

Par exemple, l'unité de décompression 35 effectue le décodage entropique, de préférence un décodage à systèmes numériques asymétriques, également appelé décodage ANS. Avantageusement, le décodage entropique effectué par l'unité de décompression 35 est un décodage à systèmes numériques asymétriques en tableau, également appelé décodage tANS, à l'aide de la table de consultation 70.

A l'issue de l'étape de décompression 160, le module d'inférence 30 effectue une étape 170 de calcul neuronal.

En particulier, l'étape de calcul neuronal 170 correspond à l'exécution de la somme pondérée de valeur(s) d'entrée issues des données du capteur 15. La pondération est faite par les poids quantifiés déterminés lors de l'étape d'apprentissage 110, qui ont été optionnellement décompressés lors de l'étape de décompression 160.

En variante, par la suite, le module d'inférence 30 applique une fonction d'activation pondérée à la somme pondérée.

Le procédé d'apprentissage selon l'invention permet d'effectuer la phase d'inférence 150 avec le module d'inférence 30 nécessitant une empreinte mémoire réduite tout en conservant de bonnes performances.

La réduction de l'empreinte mémoire est obtenue par deux aspects principaux décrits ci-dessus, ces aspects étant complémentaires et indépendants. Le premier aspect est l'ajout du terme entropique dépendant de l'entropie différentielle totale Hₜₒₜ, à la fonction de coût L. Le second aspect est la compression des poids quantifiés obtenus lors de l'étape 110 d'apprentissage, et avantageusement le codage entropique, tel que le codage tANS, desdits poids quantifiés.

Les deux aspects sont complémentaires, car l'ajout du terme entropique permet la réduction de l'entropie des poids quantifiés, ce qui a pour effet d'augmenter le potentiel de compression des poids quantifiés.

L'impact de ce premier aspect sur la réduction de l'empreinte mémoire va maintenant être décrit.

Dans un premier temps, nous allons justifier l'utilisation de l'entropie différentielle comme approximation de l'entropie de Shannon pour la distribution de(s) poids quantifié(s) d'un groupe W donné.

Par la suite, le groupe W considéré est par exemple une couche de traitement CTi d'un réseau de neurones RN.

Les poids quantifiés inclus dans le groupe W donnée sont définis par la variable aléatoire discrète $X$ où X est la variable aléatoire continue qui suit une loi de probabilité continue à support fini sur l'intervalle [*-N, N*] avec N un entier naturel, et $.$ est la fonction arrondie.

On suppose que la variable aléatoire continue X est symétrique et d'espérance nulle, et par conséquent la variable aléatoire discrète $X$ est symétrique et d'espérance nulle.

La variable aléatoire continue X est une variable aléatoire à densité f(x). L'entropie binaire différentielle H(X) de la variable aléatoire continue X vérifie typiquement l'équation : $H \left(X\right) = - {\int }_{- N}^{N} f \left(t\right) {log}_{2} \left(f\left(t\right)\right) dt$

Par exemple, si la variable aléatoire continue X suit une loi normale centrée de variance V(X), l'entropie binaire différentielle H(X) vérifie l'équation suivante : $H \left(X\right) = \frac{1}{2} {log}_{2} \left(V\left(X\right)2πe\right)$

Par relation de Chasles, l'équation [9] est équivalente à l'équation suivante : $H \left(X\right) = - {\sum }_{i = - N}^{N} {\int }_{i - \frac{1}{2}}^{i + \frac{1}{2}} f \left(t\right) {log}_{2} \left(f\left(t\right)\right) dt$

Par ailleurs, l'entropie de la variable aléatoire discrète $X$ vérifie l'équation : $\begin{matrix}H \left(X\right) = - {\sum }_{i = - N}^{N} p \left(X=i\right) {log}_{2} \left(p\left(X=i\right)\right) \\ ⇔ H \left(X\right) = - {\sum }_{i = - N}^{N} p \left(i-\frac{1}{2}<X\leq i+\frac{1}{2}\right) {log}_{2} \left(p\left(i-\frac{1}{2}<X\leq i+\frac{1}{2}\right)\right) \\ ⇔ H \left(X\right) = - {\sum }_{i = - N}^{N} {\int }_{i - \frac{1}{2}}^{i + \frac{1}{2}} f \left(t\right) dt \times {log}_{2} \left({\int }_{i - \frac{1}{2}}^{i + \frac{1}{2}} f \left(u\right) du\right)\end{matrix}$

La variable aléatoire discrète $X$ possède la même entropie qu'une variable aléatoire continue *X̃* de densité g(t), la densité g(t) vérifiant l'équation suivante : $g \left(t\right) = {\int }_{t - \frac{1}{2}}^{t + \frac{1}{2}} f \left(u\right) du$

Dans la suite de la description on notera indifféremment l'entropie $H \left(X\right)$ et *H*(*X̃*).

La différence entre l'entropie *H*(*X̃*) et l'entropie différentielle H(X) est alors définie par l'équation suivante : $\begin{matrix}H \left({X}^{˜}\right) - H \left(X\right) = {\sum }_{i = - N}^{N} {\int }_{i - \frac{1}{2}}^{i + \frac{1}{2}} f \left(t\right) {log}_{2} \left(\frac{f \left(t\right)}{{\int }_{i - \frac{1}{2}}^{i + \frac{1}{2}} f \left(u\right) du}\right) dt \\ ⇔ H \left({X}^{˜}\right) - H \left(X\right) = {\int }_{- N}^{N} f \left(t\right) {log}_{2} \left(\frac{f \left(t\right)}{{\int }_{t - \frac{1}{2}}^{t + \frac{1}{2}} f \left(u\right) du}\right) dt\end{matrix}$

L'équation [14] correspondant à une divergence de Kullback-Leibler, l'équation suivante est alors obtenue : $H \left({X}^{˜}\right) - H \left(X\right) = {D}_{KL} \left({X}^{˜}\left‖X\right.\right)$

D'après le théorème des valeurs intermédiaires, la densité f(x) prend au moins une fois la valeur ${\int }_{i - \frac{1}{2}}^{i + \frac{1}{2}} f \left(u\right) du$ sur l'intervalle $\left[i-\frac{1}{2},i+\frac{1}{2}\right]$, sans quoi la densité f serait toujours strictement supérieure ou inférieure à sa moyenne, ce qui est absurde. Soit cᵢ tel que $f \left({c}_{i}\right) = {\int }_{i - \frac{1}{2}}^{i + \frac{1}{2}} f \left(u\right) du$ , et soit $L \left(t\right) = {log}_{2} \left(\frac{f \left(t\right)}{{\int }_{t - \frac{1}{2}}^{t + \frac{1}{2}} f \left(u\right) du}\right)$. D'après l'inégalité des accroissements finis appliquée à L(t), pour t inclus dans l'intervalle $\left[i-\frac{1}{2},i+\frac{1}{2}\right]$, on obtient l'équation suivante : $\left|L\left(t\right)-L\left({c}_{i}\right)\right| \leq \left|t-{c}_{i}\right| \times {sup}_{\left[i-\frac{1}{2},i+\frac{1}{2}\right]} \left|L′\right|$

Or par définition de cᵢ, L(cᵢ) = 0. La différence entre l'entropie *H*(*X̃*) et l'entropie différentielle H(X) est alors bornée et vérifie l'équation suivante : $\begin{matrix}\left|H\left({X}^{˜}\right)-H\left(X\right)\right| \leq {\sum }_{i = - N}^{N} {sup}_{\left[i-\frac{1}{2},i+\frac{1}{2}\right]} \left|L′\right| {\int }_{i - \frac{1}{2}}^{i + \frac{1}{2}} f \left(t\right) \left|t-{c}_{i}\right| dt \\ ⇔ \left|H\left({X}^{˜}\right)-H\left(X\right)\right| \leq \frac{1}{ln \left(2\right)} {\sum }_{i = - N}^{N} {sup}_{\left[i-\frac{1}{2},i+\frac{1}{2}\right]} \left|\frac{f ′}{f}\right| {\int }_{i - \frac{1}{2}}^{i + \frac{1}{2}} f \left(t\right) \left|t-{c}_{i}\right| dt\end{matrix}$

Dans l'intégrale ci-dessus, t et cᵢ appartiennent tous deux à l'intervalle $\left[i-\frac{1}{2},i+\frac{1}{2}\right]$, donc |*t - cᵢ*| ≤ 1. Finalement, la différence entre l'entropie *H*(*X̃*) et l'entropie différentielle H(X) est alors bornée et vérifie l'équation suivante : $\left|H\left({X}^{˜}\right)-H\left(X\right)\right| \leq \frac{1}{ln \left(2\right)} {\sum }_{i = - N}^{N} {sup}_{\left[i-\frac{1}{2},i+\frac{1}{2}\right]} \left|\frac{f ′}{f}\right| {\int }_{i - \frac{1}{2}}^{i + \frac{1}{2}} f \left(t\right) dt$

Par exemple, si la variable aléatoire continue X suit une loi normale centrée de variance σ² et coupée sur [*-N, N*], en supposant N suffisamment grand pour que la probabilité de la queue de la distribution soit négligeable, la densité f(x) vérifie alors l'équation suivante : $f \left(x\right) = \frac{1}{σ \sqrt{2 π}} exp \left(-\frac{{x}^{2}}{2 {σ}^{2}}\right)$ où σ est l'écart-type de la variable aléatoire continue X.

La différence entre l'entropie *H*(*X̃*) et l'entropie différentielle H(X) vérifie alors l'équation suivante : $\left|H\left({X}^{˜}\right)-H\left(X\right)\right| \leq \frac{1}{ln \left(2\right)} {\sum }_{i = - N}^{N} \left|\frac{{t}_{i} ′}{{σ}^{2}}\right| {\int }_{i - \frac{1}{2}}^{i + \frac{1}{2}} f \left(t\right) dt$ où ${t}_{i}^{′} = {argmax}_{t ϵ \left[i-\frac{1}{2},i+\frac{1}{2}\right]} \left|\frac{f ′ \left(t\right)}{f \left(t\right)}\right|$.

Or tᵢ' appartient à l'intervalle $\left[i-\frac{1}{2},i+\frac{1}{2}\right]$, donc $t - 1 \leq {t}_{i}^{′} \leq t + 1$. Par relation de Chasles, l'équation suivante est obtenue : $\begin{matrix}\left|H\left({X}^{˜}\right)-H\left(X\right)\right| \leq \frac{1}{ln \left(2\right) {σ}^{2}} \left({\int }_{- N}^{0} \left(-t+1\right) f \left(t\right) dt+{\int }_{0}^{N} \left(t+1\right) f \left(t\right) dt\right) \\ ⇔ \left|H\left({X}^{˜}\right)-H\left(X\right)\right| \leq \frac{1}{ln \left(2\right) {σ}^{2}} \left({\int }_{- N}^{0} - t f \left(t\right) dt+{\int }_{0}^{N} t f \left(t\right) dt + {\int }_{- N}^{N} f \left(t\right) dt\right)\end{matrix}$

La troisième intégrale ci-dessus vaut 1 par propriété de la densité f(x). La somme des deux premières intégrales ci-dessus est l'espérance d'une loi demi-normale, c'est-à-dire de la valeur absolue d'une loi normale, coupée sur l'intervalle [0, N]. L'espérance de la valeur absolue d'une loi normale vaut $σ \sqrt{\frac{2}{π}}$, où σ est l'écart-type de la loi normale. Dans l'hypothèse où N est suffisamment grand, l'effet du coupage sur l'intervalle [0, N] de la loi demi-normale sur la valeur de l'espérance est négligeable. Ainsi, on considère que la somme des deux premières intégrales est égale à $σ \sqrt{\frac{2}{π}}$, ce qui est une bonne approximation. La différence entre l'entropie $H \left(X\right)$ et l'entropie différentielle H(X) vérifie alors l'équation suivante : $\left|H\left(X\right)-H\left(X\right)\right| \leq \frac{1}{ln \left(2\right)} \left(\frac{1}{σ}\sqrt{\frac{2}{π}}+\frac{1}{{σ}^{2}}\right)$

L'homme du métier observera ainsi que si l'écart-type σ est suffisamment grand, l'entropie différentielle H(X) est une bonne approximation de l'entropie $H \left(X\right)$.

L'équation [22] ci-dessus est cohérente avec les résultats expérimentaux obtenus après l'entrainement du réseau de neurones convolutionnel Resnet-18 sur l'ensemble de données d'entrainement cifar10, le réseau Resnet-18 étant entrainé pour classer des données, comme le montre la table 1 ci-dessous.

**[Table 1]**

| **Précision quantification** | **Entropie** | **Empreinte mémoire (en MB)** | | |
|---|---|---|---|---|
| | | Objectif entropique 1 | Objectif entropique 2 | Objectif entropique 3 |
| **4 bits** | Entropie discrète | 0,120 | 0,099 | 0,062 |
| | Entropie différentielle | 0,12 | 0,10 | 0,06 |
| **3 bits** | Entropie discrète | 0,077 | 0,069 | 0,063 |
| | Entropie différentielle | 0,07 | 0,06 | 0,05 |
| **2 bits** | Entropie discrète | 0,078 | 0,067 | 0,059 |
| | Entropie différentielle | 0,08 | 0,06 | 0,05 |

Dans la table 1 ci-dessus, l'empreinte mémoire du réseau de neurones Resnet-18 entrainé est calculé à partir de l'entropie de la variable aléatoire discrète $X$, aussi appelée entropie discrète, et de l'entropie différentielle de la variable aléatoire continue X, aussi appelée entropie différentielle. L'empreinte mémoire nécessaire pour stocker les poids quantifiés est comparée pour plusieurs précisions de quantification, les valeurs quantifiées étant sur 2 bits, 3 bits ou encore 4 bits dans la table 1, et pour plusieurs valeurs d'objectif entropique total Ĥ, appelés objectif entropique dans la table 1. Les objectifs entropiques totaux Ĥ sont rangés du moins agressif au plus agressif, c'est-à-dire par ordre décroissant en terme d'empreinte mémoire.

L'homme du métier observera alors tout d'abord que l'entropie différentielle H(X) est une bonne approximation de l'entropie $H \left(X\right)$ ; et ensuite qu'aux précisions les plus basses et lorsque l'objectif entropique total Ĥ est plus agressif, la qualité de l'approximation par l'entropie différentielle tend à se dégrader, autrement dit à s'écarter de sa valeur réelle calculée avec l'entropie discrète. Ce constat est cohérent avec l'équation [22]. En effet, plus la précision de quantification et l'objectif entropique total Ĥ sont faibles, plus l'écart-type σ de la loi de probabilité continue est faible, et par conséquent plus la borne de la différence entre l'entropie $H \left(X\right)$ et l'entropie différentielle H(X) est plus importante, celle-ci étant fonction de l'inverse de l'écart-type σ.

Dans un second temps, nous allons mettre en évidence l'effet du premier aspect de l'invention sur la réduction de l'empreinte mémoire, ceci afin de minimiser ensuite l'utilisation de ressources mémoire du calculateur 20 lors de l'inférence du réseau de neurones RN.

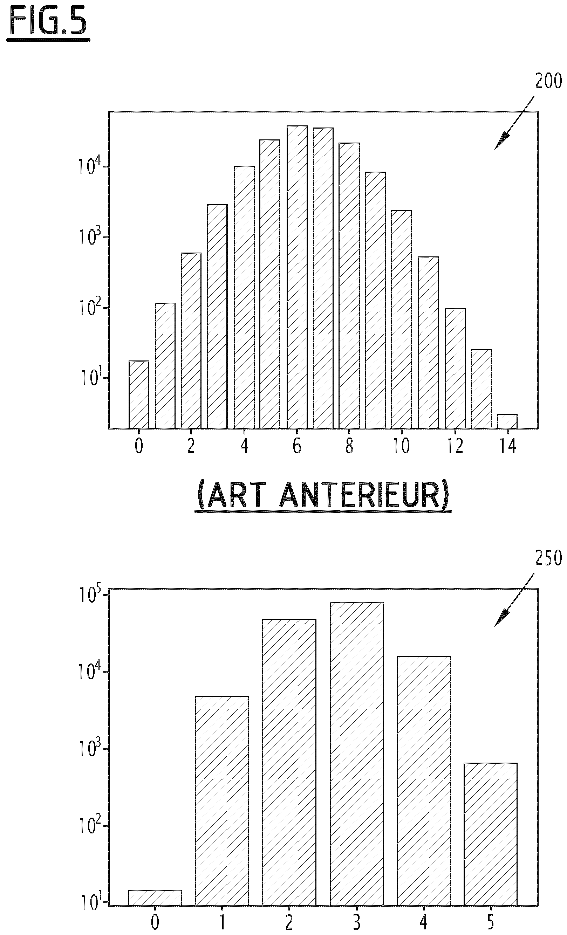

L'impact de la fonction d'objectif entropique L^{entropy} sur la distribution des poids quantifiés est par exemple représentée sur la figure 5.

La figure 5 montre deux histogrammes 200, 250, à savoir un premier histogramme 200 et un deuxième histogramme 250 représentent la distribution des poids quantifiés et codés sur 4 bits d'une couche du réseau de neurones Resnet-18 de la table 1.

Sur le premier histogramme 200 en haut de la figure 5, le module d'apprentissage de l'état de la technique détermine les poids quantifiés en l'absence de fonction d'objectif entropique dans la fonction de coût L. Les poids sont dispersés sur 15 valeurs numérotées de 0 à 14.

Sur le deuxième histogramme 250 en bas de la figure 5, le module d'apprentissage 25 détermine les poids quantifiés en présence la fonction d'objectif entropique L^{entropy} décrite ci-dessus. Les poids sont dispersés sur 6 valeurs numérotées de 0 à 5.

La fonction d'objectif entropique L^{entropy} permet donc une diminution de la variabilité des poids quantifiés, et par conséquent une diminution de l'empreinte mémoire du réseau de neurones Resnet-18.

En effet, la couche du réseau de neurones Resnet-18 entrainée sans fonction d'objectif entropique nécessite une empreinte mémoire de 48,59 ko contre 28,46 ko pour la couche du réseau de neurones Resnet-18 entrainée avec la fonction d'objectif entropique L^{entropy}.

La fonction d'objectif entropique L^{entropy} permet donc une réduction de l'empreinte mémoire. En outre, le procédé d'apprentissage selon l'invention permet d'obtenir des bonnes performances comme le montre la table 2 ci-dessous.

**[Table 2]**

| **Précision quantification** | | **Objectif entropique 1** | **Objectif entropique 2** | **Objectif entropique 3** |
|---|---|---|---|---|
| **4 bits** | Empreinte mémoire (en MB) | 0,229 | 0,100 | 0,085 |
| | Précision (%) | 90,63 | 89,72 | 86,98 |
| **3 bits** | Empreinte mémoire (en MB) | 0,132 | 0,077 | 0,069 |
| | Précision (%) | 90,63 | 90,19 | 89,25 |
| **2 bits** | Empreinte mémoire (en MB) | 0,088 | 0,078 | 0,067 |
| | Précision (%) | 89,63 | 89,74 | 89,38 |

Dans la table 2, la performance est évaluée par la précision de classification du réseau de neurone Resnet-18 de la table 1. Ici, la précision de classification, appelée Précision dans la table 2, est mesurée par une métrique de précision connue sous l'appellation Top-1 (de l'anglais *Top-1 accuracy*)*,* c'est-à-dire que la précision correspond à la proportion de données d'entrainement pour lesquelles la prédiction Yi' est égale au label Yi correspondant.

L'homme du métier observera alors que la précision de classification est proche de 90% dans la plupart des cas, ainsi le terme entropique permet d'obtenir de bonnes performances. En outre, l'homme du métier observera que pour une précision de quantification de 2 bits ou 3 bits, l'objectif entropique total Ĥ a peu d'influence sur la précision de classification, tandis que l'objectif entropique total Ĥ a beaucoup d'influence sur l'empreinte mémoire.

On étudie aussi l'avantage que présente le complément facultatif de l'invention selon lequel l'ensemble EQ de valeurs quantifiées inclut un nombre impair de valeurs quantifiées. La précision de classification et l'empreinte mémoire du réseau de neurone Resnet-18 de la table 1 dont les poids quantifiés sont inclus dans un tel ensemble EQ sont représentées dans la table 3 ci-dessous.

**[Table 3]**

| **Taille EQ** | | **Objectif entropique 1** | **Objectif entropique 2** | **Objectif entropique 3** |
|---|---|---|---|---|
| **5** | Empreinte mémoire (en MB) | 0,07 | 0,051 | 0,043 |
| | Précision (%) | 90,21 | 87,8 | 82,78 |
| **3** | Empreinte mémoire (en MB) | 0,008 | | |
| | Précision (%) | 81,75 | | |

La table 3 montre que, pour un ensemble EQ incluant 5 valeurs et l'objectif entropique 1, on obtient une précision de classification supérieure à celle obtenue pour une précision de quantification de 2 bits, soit un ensemble EQ comprenant 4 valeurs, alors que l'empreinte mémoire est plus faible. Un nombre impair de valeurs quantifiées permet donc de réduire l'empreinte mémoire du réseau de neurones Resnet-18, tout en gagnant en performance.

La table 3 montre en outre qu'une quantification ternaire, autrement dit un ensemble EQ incluant 3 valeurs, entraîne une baisse importante de la précision de classification. L'homme du métier observera tout de même que la quantification ternaire, avec une empreinte mémoire égale à 0,008 MB dans cet exemple, entraîne une diminution d'environ 90% par rapport à l'empreinte mémoire pour une précision de quantification de 2 bits, celle-ci étant alors égale à 0,088 MB dans l'exemple de la Table 2.

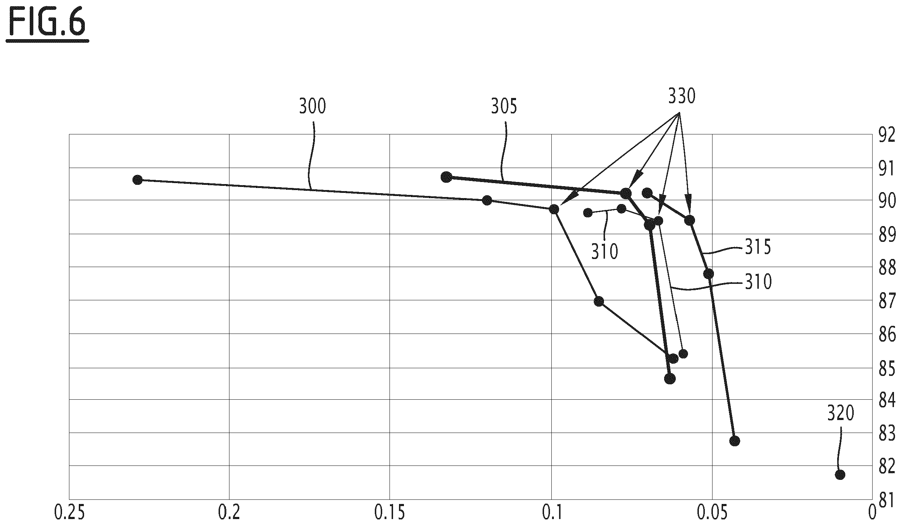

Les résultats de la table 2 et de la table 3 sont représentés sur des courbes 300, 305, 310 et 315 à la figure 6.

Chaque courbe 300, 305, 310, 315 correspond à un paramètre de précision, ou un nombre de valeurs inclus dans l'ensemble EQ, distinct pour lequel l'empreinte mémoire totale du réseau de neurones Resnet-18 est représentée en fonction de la performance du réseau de neurones Resnet-18, en particulier de la métrique de précision Top-1.

Ainsi, une première courbe 300 correspond aux résultats obtenus pour des poids quantifiés codés avec un paramètre de précision égal à 4 bits, en d'autres termes l'ensemble EQ inclut 16 valeurs de quantification.

Une deuxième courbe 305 correspond aux résultats obtenus pour des poids quantifiés codés avec un paramètre de précision égal à 3 bits, en d'autres termes l'ensemble EQ inclut 8 valeurs de quantification.

Une troisième courbe 310 correspond aux résultats obtenus pour des poids quantifiés codés avec un paramètre de précision égal à 2 bits, en d'autres termes l'ensemble EQ inclut 4 valeurs de quantification.

Une quatrième courbe 315 correspond aux résultats obtenus pour des poids quantifiés appartenant à l'ensemble EQ incluant 5 valeurs de quantification.

Un point isolé 320 correspond au résultat obtenu pour des poids quantifiés appartenant à l'ensemble EQ incluant 3 valeurs de quantification.

Chaque courbe 300, 305, 310, 315 présente une inflexion 330 correspondant à la frontière de Pareto, c'est-à-dire au meilleur compromis entre la performance et l'empreinte mémoire. En dessous de l'inflexion 330, une faible diminution d'empreinte mémoire entraîne une forte réduction de la précision de classification. Au-dessus de l'inflexion 330, une forte augmentation d'empreinte mémoire entraîne une faible augmentation de la précision de classification.

La figure 6 met en évidence également l'effet du complément facultatif selon lequel l'ensemble EQ inclut un nombre impair de valeurs. En effet, pour le réseau de neurones Resnet-18 dont les poids quantifiés prennent 5 valeurs distinctes, en référence à la quatrième courbe 315, on remarque que pour des performances similaires aux réseaux de neurones Resnet-18 dont les poids quantifiés sont codés par 4 bits, 3 bits, et respectivement 2 bits, en référence aux première 300, deuxième 305, et respectivement troisième 310 courbes, l'empreinte mémoire est moins élevée.

L'impact du deuxième aspect de l'invention, c'est-à-dire la compression des poids quantifiés sur la réduction de l'empreinte mémoire va maintenant être décrit.

Les résultats décrits ci-après prennent en compte uniquement ce deuxième aspect. Autrement dit, les réseaux de neurones RN décrits ci-après ont été entrainé par un module d'apprentissage configuré pour minimiser une fonction de coût sans fonction d'objectif entropique L^{entropy}.

La compression est de préférence réalisée par codage tANS. Le codage tANS présente l'avantage d'être facilement décodable à l'inférence par la présence de la table de consultation 70 incluse dans l'unité de décompression 35.

En outre, le codage tANS et le décodage tANS permettent de diminuer grandement l'empreinte mémoire nécessaire pour stocker les poids quantifiés.

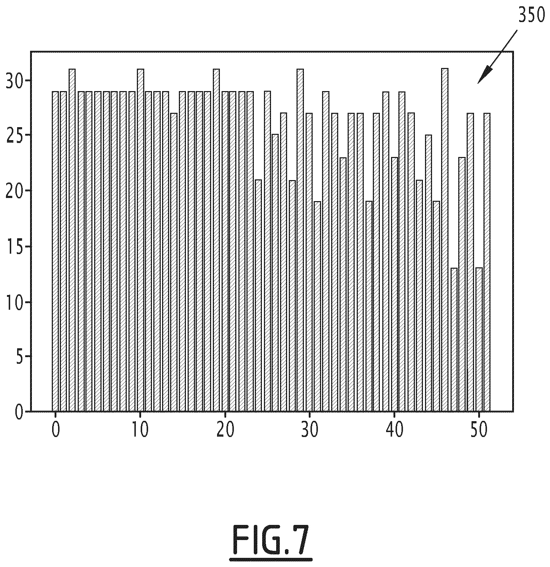

Par exemple, l'histogramme 350 de la figure 7 représente le nombre de valeurs quantifiées distinctes de chaque couche de traitement CTi du réseau de neurones RN, le réseau de neurones RN étant un réseau Resnet-50 entrainé sur les données d'entrainement d'ImageNet. Le réseau de neurones Resnet-50 comprend 52 couches de traitement CTi.

L'histogramme 350 suggère que la précision de quantification λ_{W}, où chaque groupe W est une couche de traitement CTi, est optimisée en fonction de la couche concernée.

En outre, chaque couche de traitement CTi présente un nombre impair de valeurs quantifiées distinctes comprises dans un ensemble EQi respectifs de valeurs quantifiés.

De préférence, chaque ensemble EQi inclut la valeur nulle.

De préférence, les valeurs quantifiées positives de chaque ensemble EQi sont symétriques des valeurs quantifiées négatives de chaque ensemble EQi par rapport à la valeur nulle.

Sur l'histogramme 350, le nombre maximum de valeurs distinctes pour une couche atteint 31 valeurs ; et le nombre minimum est de 13 valeurs.

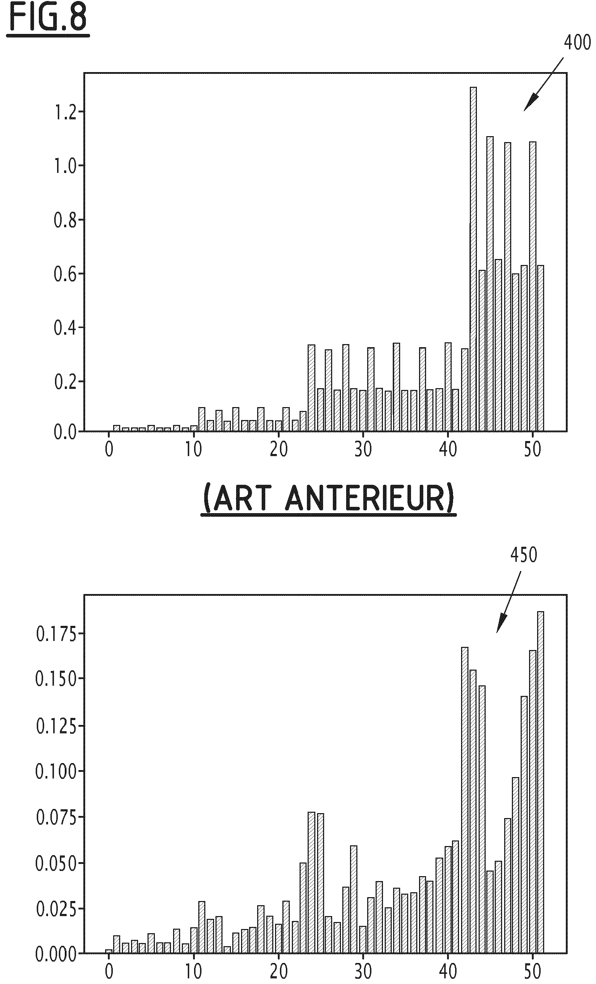

Les deux histogrammes 400, 450 de la figure 8, à savoir un premier histogramme 400 et un deuxième histogramme 450, représentent l'empreinte mémoire nécessaire pour stocker les poids quantifiés du réseau de neurones Resnet-50 de la figure 7.

Sur le premier histogramme 400 en haut de la figure 8, l'empreinte mémoire en MB nécessaire pour stocker les poids quantifiés de chaque couche CTi avant compression est représentée. Certaines couches atteignent une empreinte mémoire de 1,3 MB.

Sur le deuxième histogramme 450 en bas de la figure 8, l'empreinte mémoire en MB nécessaire pour stocker les poids quantifiés de chaque couche CTi après compression par codage tANS est représentée. L'empreinte mémoire maximum atteinte est de 185 Ko, ainsi certaines couches CTi ont été compressées jusqu'à 20 fois.

Ainsi, la réduction de l'empreinte mémoire se fait en gardant le réseau de neurones RN avec des bonnes performances même après décodage, comme le montre la table 4 ci-dessous.

**[Table 4]**

| **RN** | **Compression** | **Précision (en %)** | **Empreinte mémoire (en MB)** |
|---|---|---|---|
| 1 | *Etat de la technique 1* | 68,8 | 3,6 |
| | *Etat de la technique 2* | 70,0 | 2,78 |
| | *Etat de la technique 3* | 68,5 | 2,01 |
| | Codage tANS | 69,0 | 1,67 |
| 2 | *Etat de la technique 1* | 71,3 | 5,5 |
| | *Etat de la technique 2* | 73,5 | 5,91 |
| | *Etat de la technique 4* | 73,7 | 5,25 |
| | Codage tANS | 75,6 | 4,52 |

Les réseaux de neurones RN de la table 4 sont entrainés tels que les poids quantifiés soit inclut dans un ensemble EQ incluant la valeur nulle.

Le réseau de neurones RN 1 de la table 4 correspond à un réseau Resnet-18 entrainé sur les données d'entrainement d'ImageNet. Avant compression, le réseau Resnet-18 nécessite une empreinte mémoire de 46,8 MB et atteint une précision de classification de 69,8%.

Le réseau de neurones RN 2 de la table 4 correspond à un réseau Resnet-50 entrainé sur les données d'entraînement d'ImageNet. Avant compression, le réseau Resnet-50 nécessite une empreinte mémoire de 102,5 MB et atteint une précision de classification de 76,1%.

L'état de la technique 1 correspond aux valeurs obtenues par la méthode de compression LZMA, notamment utilisée pour la compression de poids dans l'article *«* HEMP: High-order Entropy Minimization for neural network compression » de Tartaglione et al. en 2021.

L'état de la technique 2 correspond aux valeurs obtenues par la méthode décrite dans l'article « Scalable model compression by entropy penalized reparameterization » de Oktay et al. en 2020. Cette méthode comprend un entrainement du décodeur, en plus de l'entrainement des paramètres du réseau.

L'état de la technique 3 correspond à la méthode FracBits, appliquée aux poids uniquement et pas aux activations, décrite dans l'article *«* FracBits: Mixed Precision Quantization via Fractional Bit-Widths » de L.Yang et Q. Jin en 2020.

L'état de la technique 4 correspond à la méthode de codage de Golomb doublé d'un codage arithmétique avec contexte, décrite dans l'article *«* DeepCABAC : A Universal Compression Algorithm for Deep Neural Networks » de Wiedemann et al. en 2020.

Pour les deux réseaux de neurones RN 1 et RN 2, la table 4 montre une réduction importante de l'empreinte mémoire nécessaire pour stocker l'ensemble des poids quantifiés de chaque couche, lorsqu'ils sont compressés via le codage tANS par rapport aux différentes méthodes de l'état de la technique. La précision Top-1 des réseaux de neurones RN 1 et RN 2 compressés par codage tANS étant sensiblement égale à la précision des réseaux de neurones de l'état de la technique ou même supérieure pour le réseau de neurones RN 2. L'homme du métier observera alors que la compression via le codage tANS permet cette réduction importante de l'empreinte mémoire, tout en n'altérant pas la précision obtenue.

Grâce aux deux aspects du procédé d'apprentissage selon l'invention, il est ainsi possible d'entrainer le réseau de neurones RN configuré pour être mis en œuvre par le calculateur électronique 20, en ayant une empreinte mémoire nécessaire au fonctionnement du réseau RN réduite, tout en conservant les performances du réseau RN, notamment sa précision de classification. Ainsi, l'invention permet d'avoir des calculateurs électroniques 20 embarqués de taille plus réduite pour effectuer le traitement de données, notamment la classification de données, via la mise en œuvre du réseau de neurones artificiels RN.

On conçoit ainsi que le procédé d'apprentissage selon l'invention permet de réduire l'empreinte mémoire du réseau RN sans perte d'efficacité de traitement des données et de faciliter l'inférence dudit réseau de neurones RN par le calculateur 20.

## Revendications

1. Procédé d'apprentissage de poids synaptiques d'au moins une couche (CT1, CT2, CT3) d'un réseau de neurones artificiels (RN) configuré pour traiter, notamment pour classifier, des données, le réseau de neurones artificiels (RN) étant configuré pour être mis en œuvre par un calculateur électronique (20) connecté à un capteur (15), pour le traitement d'au moins un objet issu du capteur (15), chaque neurone artificiel d'une couche (CT1, CT2, CT3) respective étant apte à effectuer une somme pondérée de valeur(s) d'entrée, puis à appliquer une fonction d'activation à la somme pondérée pour délivrer une valeur de sortie, chaque valeur d'entrée étant reçue de la part d'un élément respectif connecté en entrée dudit neurone et multipliée par un poids synaptique associé à la connexion entre ledit neurone et l'élément respectif, l'élément respectif étant une variable d'entrée du réseau de neurones (RN) ou un neurone d'une couche précédente du réseau de neurones (RN),
le procédé étant mis en œuvre par ordinateur et comprenant l'étape suivante :
- détermination (110) des poids du réseau de neurones (RN) à partir de données d'apprentissage, chaque poids déterminé étant une valeur quantifiée appartenant à un ensemble prédéfini (EQ) de valeurs quantifiées ;
les poids étant déterminés par minimisation d'une fonction de coût (L), la fonction de coût (L) dépendant d'un terme d'erreur (L^{cls}) correspondant à une erreur de prédiction et d'un terme entropique,
où le terme entropique dépend d'une entropie différentielle totale (Hₜₒₜ) des poids quantifiés,
le réseau de neurones (RN) comprend des groupes (W) de poids du réseau, chaque groupe (W) de poids comprenant au moins un poids quantifié appartenant à l'ensemble prédéfini (EQ) de valeurs quantifiées, à chaque groupe (W) de poids est associé un paramètre de précision (λ_{W}) égal au nombre de bits utilisés pour le codage de l'au moins un poids du groupe (W), chaque paramètre de précision (λ_{W}) est un réel positif,
le terme entropique est le produit d'un facteur multiplicatif (κ) et d'une fonction d'objectif entropique (L^{entropy}), la fonction d'objectif entropique (L^{entropy}) dépendant des paramètres de précision (λ_{W}) et de l'entropie différentielle totale (Hₜₒₜ) des poids quantifiés, et
la minimisation de la fonction de coût (L) comprend le calcul d'un gradient de la fonction de coût (L).

2. Procédé selon la revendication 1, dans lequel l'entropie différentielle totale (Hₜₒₜ) est une somme de produits pour lesdits groupes, chaque produit étant un produit d'un cardinal (|W|) d'un groupe respectif et de l'entropie différentielle (H(W)) dudit groupe.

3. Procédé selon la revendication 1 ou 2, dans lequel la fonction de coût (L) est la somme du terme d'erreur (L^{cls}) et du terme entropique ;
la fonction de coût (L) vérifiant de préférence encore l'équation : $L = {L}^{cls} + κ . {L}^{entropy}$
où L représente la fonction de coût,
L^{cls} représente le terme d'erreur,
κ représente le facteur multiplicatif, et
L^{entropy} représente la fonction d'objectif entropique.

4. Procédé selon la revendication 2 ou 3, dans lequel la fonction d'objectif entropique (L^{entropy}) dépend en outre d'un objectif entropique total (Ĥ) prédéfini.

5. Procédé selon la revendication 4, dans lequel la fonction d'objectif entropique (L^{entropy}) dépend d'une différence entre l'entropie différentielle totale (Hₜₒₜ) et l'objectif entropique total (Ĥ).

6. Procédé selon l'une quelconque des revendications 1 à 5, dans lequel lorsque chaque paramètre de précision (λ_{W}) est un entier et lorsque la distribution des poids quantifiés de chaque groupe (W) suit une loi normale arrondie, la dérivée - par rapport aux poids d'un groupe (W) respectif - de la fonction d'objectif entropique (L^{entropy}) vérifie l'équation suivante : $\frac{\partial {L}^{entropy}}{\partial W} = \frac{W - E \left(W\right)}{n . ln \left(2\right) V \left(W\right) \hat{H}}$
où L^{entropy} représente la fonction d'objectif entropique,
W représente le groupe respectif de poids,
V(W) représente la variance de la loi normale,
E(W) représente l'espérance de la loi normale,
*Ĥ* représente l'objectif entropique total, et
n est le nombre de poids quantifiés du groupe W.

7. Procédé selon l'une quelconque des revendications 1 à 5, dans lequel la dérivée - par rapport au paramètre de précision (λ_{W}) d'un groupe (W) respectif - de la fonction d'objectif entropique (L^{entropy}) vérifie l'équation : $\frac{\partial {L}^{entropy}}{\partial {λ}_{W}} = \frac{\left|W\right|}{\hat{H}} \left({H}_{W \left(\left⌈{λ}_{W}\right⌉\right)}-{H}_{W \left(\left⌊{λ}_{W}\right⌋\right)}\right)$
où L^{entropy} représente la fonction d'objectif entropique,
λ_{W} représente le paramètre de précision du groupe respectif,
W représente le groupe respectif de poids,
H_{W} représente l'entropie différentielle du groupe W,
Ĥ représente l'objectif entropique totale,
$\left⌊.\right⌋$ représente la partie entière inférieure, et
$\left⌈.\right⌉$ représente la partie entière supérieure.

8. Procédé selon l'une quelconque des revendications précédentes, dans lequel l'ensemble prédéfini (EQ) de valeurs quantifiées inclut un nombre impair de valeurs.

9. Procédé selon l'une quelconque des revendications précédentes, dans lequel l'ensemble prédéfini (EQ) de valeurs quantifiées inclut la valeur nulle ;
les valeurs quantifiées positives de l'ensemble prédéfini (EQ) de valeurs quantifiées étant de préférence symétriques, des valeurs quantifiées négatives de l'ensemble prédéfini (EQ) de valeurs quantifiées par rapport à la valeur nulle.

10. Procédé selon l'une quelconque des revendications précédentes, dans lequel le procédé comprend en outre, après l'étape (110) de détermination des poids, une étape (120) de compression des poids déterminés.

11. Procédé selon la revendication 10, dans lequel la compression (120) est réalisée via un codage entropique.

12. Procédé selon la revendication 11, dans lequel le codage entropique est un codage à systèmes numériques asymétriques (ANS) ;
le codage entropique étant de préférence un codage à systèmes numériques asymétriques en tableau (tANS).

13. Procédé de traitement de données, notamment de classification de données, le procédé étant mis en œuvre par un calculateur électronique (20) implémentant un réseau de neurones artificiels (RN), le procédé comprenant :
- une phase d'apprentissage (100) du réseau de neurones artificiels (RN), et
- une phase d'inférence (150) du réseau de neurones artificiels (RN), lors de laquelle des données, reçues en entrée du calculateur électronique (20), sont traitées, notamment classées, via le réseau de neurones artificiels (RN), préalablement entraîné lors de la phase d'apprentissage (100),
où la phase d'apprentissage (100) est effectuée en mettant en œuvre un procédé d'apprentissage selon l'une quelconque des revendications 1 à 12.

14. Programme d'ordinateur comportant des instructions logicielles qui, lorsqu'elles sont exécutées par un ordinateur, mettent en œuvre un procédé d'apprentissage selon l'une quelconque des revendications 1 à 12.

15. Calculateur électronique (20) de traitement de données, notamment de classification de données, via la mise en œuvre d'un réseau (RN) de neurones artificiels, le calculateur électronique (20) étant destiné à être connecté à un capteur (15), pour le traitement d'au moins un objet issu du capteur (15), chaque neurone artificiel d'une couche respective (CT1, CT2, CT3) du réseau de neurones (RN) étant apte à effectuer une somme pondérée de valeur(s) d'entrée, puis à appliquer une fonction d'activation à la somme pondérée pour délivrer une valeur de sortie, chaque valeur d'entrée étant reçue de la part d'un élément respectif connecté en entrée dudit neurone et multipliée par un poids synaptique associé à la connexion entre ledit neurone et l'élément respectif, l'élément respectif étant une variable d'entrée du réseau de neurones (RN) ou un neurone d'une couche précédente du réseau de neurones,
le calculateur (20) comprenant :
- un module d'inférence (30) configuré pour inférer le réseau de neurones artificiels (RN) préalablement entraîné, pour le traitement, notamment la classification, de données reçues en entrée du calculateur électronique (20),
où le réseau de neurones artificiels (RN) préalablement entraîné lors d'une phase d'apprentissage (100) est obtenu par l'exécution par un ordinateur d'un programme d'ordinateur selon la revendication 14.

16. Calculateur (20) selon la revendication 15, dans lequel le module d'inférence (30) est configuré pour effectuer la somme pondérée de valeur(s) d'entrée, puis pour appliquer une fonction d'activation à la somme pondérée.

17. Calculateur (20) selon la revendication 15 ou 16, dans lequel, lors de la phase d'apprentissage (100) les poids du réseau de neurones artificiels (RN) sont compressés, et le module d'inférence (30) comprend en outre une unité de décompression (35) configurée pour décompresser lesdits poids compressés ;
la compression étant de préférence effectuée via un codage entropique, et l'unité de décompression (35) effectuant alors un décodage entropique des poids compressés.

18. Calculateur (20) selon la revendication 17, dans lequel le codage entropique est un codage à systèmes numériques asymétriques en tableau (tANS), et l'unité de décompression (35) comprend une table de décodage (70) du codage à systèmes numériques asymétriques en tableau (tANS).

19. Système électronique de traitement d'objet(s), comprenant un capteur (15) et un calculateur électronique (20) connecté au capteur (15), le calculateur (20) étant configuré pour traiter au moins un objet issu du capteur (15),
où le calculateur électronique (20) est selon l'une quelconque des revendications 15 à 18.

## Patentansprüche

1. Verfahren zum Lernen synaptischer Gewichte mindestens einer Schicht (CT1, CT2, CT3) eines künstlichen neuronalen Netzes (RN), das dazu konfiguriert ist, Daten zu verarbeiten, insbesondere zu klassifizieren, wobei das künstliche neuronale Netz (RN) dazu konfiguriert ist, durch einen elektronischen Rechner (20), der mit einem Sensor (15) verbunden ist, für die Verarbeitung mindestens eines von dem Sensor (15) stammenden Objekts umgesetzt zu werden, wobei jedes künstliche Neuron einer jeweiligen Schicht (CT1, CT2, CT3) dazu geeignet ist, eine gewichtete Summe von Eingangswert(en) durchzuführen, dann eine Aktivierungsfunktion auf die gewichtete Summe anzuwenden, um einen Ausgangswert abzugeben, wobei jeder Eingangswert von einem jeweiligen Element empfangen wird, das am Eingang des genannten Neurons verbunden ist, und mit einem synaptischen Gewicht multipliziert wird, das der Verbindung zwischen dem genannten Neuron und dem jeweiligen Element zugeordnet ist, wobei das jeweilige Element eine Eingangsvariable des neuronalen Netzes (RN) oder ein Neuron einer vorhergehenden Schicht des neuronalen Netzes (RN) ist,
wobei das Verfahren durch Computer umgesetzt wird und den folgenden Schritt umfasst:
- Bestimmung (110) der Gewichte des neuronalen Netzes (RN) aus Lerndaten, wobei jedes bestimmte Gewicht ein quantisierter Wert ist, der zu einer vordefinierten Menge (EQ) von quantisierten Werten gehört;
wobei die Gewichte durch Minimierung einer Kostenfunktion (L) bestimmt werden, wobei die Kostenfunktion (L) von einem Fehlerterm (L^{cls}), der einem Vorhersagefehler entspricht, und von einem entropischen Term abhängt,
oder der entropische Term von einer gesamten differentiellen Entropie (Hₜₒₜ) der quantisierten Gewichte abhängt,
das neuronale Netz (RN) Gruppen (W) von Gewichten des Netzes umfasst, wobei jede Gruppe (W) von Gewichten mindestens ein quantisiertes Gewicht umfasst, das zu der vordefinierten Menge (EQ) von quantisierten Werten gehört,
jeder Gruppe (W) von Gewichten ein Genauigkeitsparameter (λ_{W}) zugeordnet ist, der gleich der Anzahl von Bits ist, die für die Kodierung des mindestens einen Gewichts der Gruppe (W) verwendet werden, wobei jeder Genauigkeitsparameter (λ_{W}) eine positive reelle Zahl ist,
der entropische Term das Produkt eines Multiplikationsfaktors (κ) und einer entropischen Zielfunktion (L^{entropy}) ist, wobei die entropische Zielfunktion (L^{entropy}) von den Genauigkeitsparametern (λ_{W}) und von der gesamten differentiellen Entropie (Hₜₒₜ) der quantisierten Gewichte abhängt, und
die Minimierung der Kostenfunktion (L) die Berechnung eines Gradienten der Kostenfunktion (L) umfasst.

2. Verfahren nach Anspruch 1, wobei die gesamte differentielle Entropie (Hₜₒₜ) eine Summe von Produkten für die genannten Gruppen ist, wobei jedes Produkt ein Produkt einer Kardinalität (|W|) einer jeweiligen Gruppe und der differentiellen Entropie (H(W)) der genannten Gruppe ist.

3. Verfahren nach Anspruch 1 oder 2, wobei die Kostenfunktion (L) die Summe des Fehlerterms (L^{cls}) und des entropischen Terms ist;
wobei die Kostenfunktion (L) vorzugsweise ferner die Gleichung erfüllt: $L = {L}^{cls} + κ . {L}^{entropy}$
wobei L die Kostenfunktion darstellt,
L^{cls} den Fehlerterm darstellt,
κ den Multiplikationsfaktor darstellt, und
L^{entropy} die entropische Zielfunktion darstellt.

4. Verfahren nach Anspruch 2 oder 3, wobei die entropische Zielfunktion (L^{entropy}) ferner von einem vordefinierten gesamten entropischen Ziel (Ĥ) abhängt.

5. Verfahren nach Anspruch 4, wobei die entropische Zielfunktion (L^{entropy}) von einer Differenz zwischen der gesamten differentiellen Entropie (Hₜₒₜ) und dem gesamten entropischen Ziel (Ĥ) abhängt.

6. Verfahren nach einem der Ansprüche 1 bis 5, wobei, wenn jeder Genauigkeitsparameter (λ_{W}) eine ganze Zahl ist und wenn die Verteilung der quantisierten Gewichte jeder Gruppe (W) einem gerundeten Normalgesetz folgt, die Ableitung - in Bezug auf die Gewichte einer jeweiligen Gruppe (W) - der entropischen Zielfunktion (L^{entropy}) die folgende Gleichung erfüllt: $\frac{\partial {L}^{entropy}}{\partial W} = \frac{W - E \left(W\right)}{n . ln \left(2\right) V \left(W\right) \hat{H}}$
wobei L^{entropy} die entropische Zielfunktion darstellt,
W die jeweilige Gruppe von Gewichten darstellt,
V(W) die Varianz des Normalgesetzes darstellt,
E(W) den Erwartungswert des Normalgesetzes darstellt,
*Ĥ* das gesamte entropische Ziel darstellt, und
n die Anzahl der quantisierten Gewichte der Gruppe W ist.

7. Verfahren nach einem der Ansprüche 1 bis 5, wobei die Ableitung - in Bezug auf den Genauigkeitsparameter (λ_{W}) einer jeweiligen Gruppe (W) - der entropischen Zielfunktion (L^{entropy}) die Gleichung erfüllt: $\frac{\partial {L}^{entropy}}{\partial {λ}_{W}} = \frac{\left|W\right|}{\hat{H}} \left({H}_{W \left(\left|{λ}_{W}\right|\right)}-{H}_{W \left(\left⌊{λ}_{W}\right⌋\right)}\right)$
wobei L^{entropy} die entropische Zielfunktion darstellt,
λ_{W} den Genauigkeitsparameter der jeweiligen Gruppe darstellt,
W die jeweilige Gruppe von Gewichten darstellt,
H_{W} die differentielle Entropie der Gruppe W darstellt,
Ĥ das gesamte entropische Ziel darstellt,
$\left⌊. \right⌋$ den unteren ganzzahligen Teil darstellt, und
$\left⌈. \right⌉$ den oberen ganzzahligen Teil darstellt.

8. Verfahren nach einem der vorhergehenden Ansprüche, wobei die vordefinierte Menge (EQ) von quantisierten Werten eine ungerade Anzahl von Werten einschließt.

9. Verfahren nach einem der vorhergehenden Ansprüche, wobei die vordefinierte Menge (EQ) von quantisierten Werten den Nullwert einschließt;
wobei die positiven quantisierten Werte der vordefinierten Menge (EQ) von quantisierten Werten vorzugsweise symmetrisch sind, von negativen quantisierten Werten der vordefinierten Menge (EQ) von quantisierten Werten in Bezug auf den Nullwert.

10. Verfahren nach einem der vorhergehenden Ansprüche, wobei das Verfahren ferner, nach dem Schritt (110) der Bestimmung der Gewichte, einen Schritt (120) der Komprimierung der bestimmten Gewichte umfasst.

11. Verfahren nach Anspruch 10, wobei die Komprimierung (120) über eine Entropiekodierung durchgeführt wird.

12. Verfahren nach Anspruch 11, wobei die Entropiekodierung eine Kodierung mit asymmetrischen Zahlensystemen (ANS) ist;
wobei die Entropiekodierung vorzugsweise eine Kodierung mit tabellarischen asymmetrischen Zahlensystemen (tANS) ist.

13. Verfahren zur Verarbeitung von Daten, insbesondere zur Klassifizierung von Daten, wobei das Verfahren durch einen elektronischen Rechner (20) umgesetzt wird, der ein künstliches neuronales Netz (RN) implementiert, wobei das Verfahren umfasst:
- eine Lernphase (100) des künstlichen neuronalen Netzes (RN), und
- eine Inferenzphase (150) des künstlichen neuronalen Netzes (RN), während der Daten, die am Eingang des elektronischen Rechners (20) empfangen werden, über das künstliche neuronale Netz (RN), das zuvor während der Lernphase (100) trainiert wurde, verarbeitet, insbesondere klassifiziert, werden,
wobei die Lernphase (100) durchgeführt wird, indem ein Lernverfahren nach einem der Ansprüche 1 bis 12 umgesetzt wird.

14. Computerprogramm, umfassend Softwareanweisungen, die, wenn sie von einem Computer ausgeführt werden, ein Lernverfahren nach einem der Ansprüche 1 bis 12 umsetzen.

15. Elektronischer Rechner (20) zur Verarbeitung von Daten, insbesondere zur Klassifizierung von Daten, über die Umsetzung eines Netzes (RN) künstlicher Neuronen, wobei der elektronische Rechner (20) dazu bestimmt ist, mit einem Sensor (15) verbunden zu werden, für die Verarbeitung mindestens eines von dem Sensor (15) stammenden Objekts, wobei jedes künstliche Neuron einer jeweiligen Schicht (CT1, CT2, CT3) des neuronalen Netzes (RN) dazu geeignet ist, eine gewichtete Summe von Eingangswert(en) durchzuführen, dann eine Aktivierungsfunktion auf die gewichtete Summe anzuwenden, um einen Ausgangswert abzugeben, wobei jeder Eingangswert von einem jeweiligen Element empfangen wird, das am Eingang des genannten Neurons verbunden ist, und mit einem synaptischen Gewicht multipliziert wird, das der Verbindung zwischen dem genannten Neuron und dem jeweiligen Element zugeordnet ist, wobei das jeweilige Element eine Eingangsvariable des neuronalen Netzes (RN) oder ein Neuron einer vorhergehenden Schicht des neuronalen Netzes ist,
wobei der Rechner (20) umfasst:
- ein Inferenzmodul (30), das dazu konfiguriert ist, das zuvor trainierte künstliche neuronale Netz (RN) zu inferieren, für die Verarbeitung, insbesondere die Klassifizierung, von Daten, die am Eingang des elektronischen Rechners (20) empfangen werden,
wobei das künstliche neuronale Netz (RN), das zuvor während einer Lernphase (100) trainiert wurde, durch die Ausführung durch einen Computer
eines Computerprogramms nach Anspruch 14 erhalten wird.

16. Rechner (20) nach Anspruch 15, wobei das Inferenzmodul (30) dazu konfiguriert ist, die gewichtete Summe von Eingangswert(en) durchzuführen, dann eine Aktivierungsfunktion auf die gewichtete Summe anzuwenden.

17. Rechner (20) nach Anspruch 15 oder 16, wobei, während der Lernphase (100), die Gewichte des künstlichen neuronalen Netzes (RN) komprimiert werden, und das Inferenzmodul (30) ferner eine Dekomprimierungseinheit (35) umfasst, die dazu konfiguriert ist, die genannten komprimierten Gewichte zu dekomprimieren;
wobei die Komprimierung vorzugsweise über eine Entropiekodierung durchgeführt wird, und die Dekomprimierungseinheit (35) dann eine Entropiedekodierung der komprimierten Gewichte durchführt.

18. Rechner (20) nach Anspruch 17, wobei die Entropiekodierung eine Kodierung mit tabellarischen asymmetrischen Zahlensystemen (tANS) ist, und die Dekomprimierungseinheit (35) eine Dekodiertabelle (70) der Kodierung mit tabellarischen asymmetrischen Zahlensystemen (tANS) umfasst.

19. Elektronisches System zur Verarbeitung von Objekt(en), umfassend einen Sensor (15) und einen elektronischen Rechner (20), der mit dem Sensor (15) verbunden ist, wobei der Rechner (20) dazu konfiguriert ist, mindestens ein von dem Sensor (15) stammendes Objekt zu verarbeiten,
wobei der elektronische Rechner (20) nach einem der Ansprüche 15 bis 18 ist.

## Claims

1. Method for learning synaptic weights of at least one layer (CT1, CT2, CT3) of an artificial neural network (RN) configured to process, in particular to classify, data, the artificial neural network (RN) being configured to be implemented by an electronic computer (20) connected to a sensor (15), for the processing of at least one object coming from the sensor (15), each artificial neuron of a respective layer (CT1, CT2, CT3) being capable of performing a weighted sum of input value(s), then of applying an activation function to the weighted sum in order to deliver an output value, each input value being received from a respective element connected at the input of said neuron and multiplied by a synaptic weight associated with the connection between said neuron and the respective element, the respective element being an input variable of the neural network (RN) or a neuron of a preceding layer of the neural network (RN),
the method being implemented by computer and comprising the following step:
- determining (110) the weights of the neural network (RN) from learning data, each determined weight being a quantized value belonging to a predefined set (EQ) of quantized values;
the weights being determined by minimization of a cost function (L), the cost function (L) depending on an error term (L^{cls}) corresponding to a prediction error and on an entropic term,
wherein the entropic term depends on a total differential entropy (Hₜₒₜ) of the quantized weights,
the neural network (RN) comprises groups (W) of weights of the network, each group (W) of weights comprising at least one quantized weight belonging to the predefined set (EQ) of quantized values,
with each group (W) of weights is associated a precision parameter (λ_{W}) equal to the number of bits used for the coding of the at least one weight of the group (W), each precision parameter (λ_{W}) is a positive real number,
the entropic term is the product of a multiplicative factor (κ) and of an entropic objective function (L^{entropy}), the entropic objective function (L^{entropy}) depends on the precision parameters (λW) and on the total differential entropy (Hₜₒₜ) of the quantized weights, and
the minimization of the cost function (L) comprises the calculation of a gradient of the cost function (L).

2. Method according to claim 1, wherein the total differential entropy (Hₜₒₜ) is a sum of products for said groups, each product being a product of a cardinality (|W|) of a respective group and of the differential entropy (H(W)) of said group.

3. Method according to claim 1 or 2, wherein the cost function (L) is the sum of the error term (L^{cls}) and of the entropic term;
the cost function (L) preferably further satisfying the equation: $L = {L}^{cls} + κ . {L}^{entropy}$
where L represents the cost function,
L^{cls} represents the error term,
κ represents the multiplicative factor, and
L^{entropy} represents the entropic objective function.

4. Method according to claim 2 or 3, wherein the entropic objective function (L^{entropy}) further depends on a predefined total entropic objective (Ĥ).

5. Method according to claim 4, wherein the entropic objective function (L^{entropy}) depends on a difference between the total differential entropy (Hₜₒₜ) and the total entropic objective (Ĥ).

6. Method according to any one of claims 1 to 5, wherein when each precision parameter (λ_{W}) is an integer and when the distribution of the quantized weights of each group (W) follows a rounded normal law, the derivative - with respect to the weights of a respective group (W) - of the entropic objective function (L^{entropy}) satisfies the following equation: $\frac{\partial {L}^{entropy}}{\partial W} = \frac{W - E \left(W\right)}{n . ln \left(2\right) V \left(W\right) \hat{H}}$
where L^{entropy} represents the entropic objective function,
W represents the respective group of weights,
V(W) represents the variance of the normal law,
E(W) represents the expectation of the normal law,
*Ĥ* represents the total entropic objective, and
n is the number of quantized weights of the group W.

7. Method according to any one of claims 1 to 5, wherein the derivative - with respect to the precision parameter (λ_{W}) of a respective group (W) - of the entropic objective function (L^{entropy}) satisfies the equation: $\frac{\partial {L}^{entropy}}{\partial {λ}_{W}} = \frac{\left|W\right|}{\hat{H}} \left({H}_{W \left(\left|{λ}_{W}\right|\right)}-{H}_{W \left(\left⌊{λ}_{W}\right⌋\right)}\right)$
where L^{entropy} represents the entropic objective function,
λ_{W} represents the precision parameter of the respective group,
W represents the respective group of weights,
H_{W} represents the differential entropy of the group W,
Ĥ represents the total entropic objective,
$\left⌊. \right⌋$ represents the lower integer part, and
$\left⌈. \right⌉$ represents the upper integer part.

8. Method according to any one of the preceding claims, wherein the predefined set (EQ) of quantized values includes an odd number of values.

9. Method according to any one of the preceding claims, wherein the predefined set (EQ) of quantized values includes the zero value;
the positive quantized values of the predefined set (EQ) preferably being symmetric of with respect to the zero value relative to the negative quantized values of the predefined set (EQ).

10. Method according to any one of the preceding claims, wherein the method further comprises, after the step (110) of determining the weights, a step (120) of compressing the determined weights.

11. Method according to claim 10, wherein the compression (120) is carried out via an entropic coding.

12. Method according to claim 11, wherein the entropic coding is an asymmetric numeral systems coding (ANS);
the entropic coding preferably being a tabled asymmetric numeral systems coding (tANS).

13. Method for processing data, in particular for classifying data, the method being implemented by an electronic computer (20) implementing an artificial neural network (RN), the method comprising:
- a learning phase (100) of the artificial neural network (RN), and
- an inference phase (150) of the artificial neural network (RN), during which data, received at the input of the electronic computer (20), are processed, in particular classified, via the artificial neural network (RN), previously trained during the learning phase (100),
wherein the learning phase (100) is carried out by implementing a learning method according to any one of claims 1 to 12.

14. Computer program comprising software instructions which, when they are executed by a computer, implement a learning method according to any one of claims 1 to 12.

15. Electronic computer (20) for processing data, in particular for classifying data, via the implementation of an artificial neural network (RN), the electronic computer (20) being intended to be connected to a sensor (15), for the processing of at least one object coming from the sensor (15), each artificial neuron of a respective layer (CT1, CT2, CT3) of the neural network (RN) being capable of performing a weighted sum of input value(s), then of applying an activation function to the weighted sum in order to deliver an output value, each input value being received from a respective element connected at the input of said neuron and multiplied by a synaptic weight associated with the connection between said neuron and the respective element, the respective element being an input variable of the neural network (RN) or a neuron of a preceding layer of the neural network,
the computer (20) comprising:
- an inference module (30) configured to infer the previously trained artificial neural network (RN), for the processing, in particular the classification, of data received at the input of the electronic computer (20),
wherein the artificial neural network (RN) previously trained during a learning phase (100) is obtained by the execution by a computer of a computer program according to claim 14.

16. Computer (20) according to claim 15, wherein the inference module (30) is configured to perform the weighted sum of input value(s), then to apply an activation function to the weighted sum.

17. Computer (20) according to claim 15 or 16, wherein, during the learning phase (100) the weights of the artificial neural network (RN) are compressed, and the inference module (30) further comprises a decompression unit (35) configured to decompress the said compressed weights;
the compression preferably being carried out via an entropic coding, and the decompression unit (35) then carrying out an entropic decoding of the compressed weights.

18. Computer (20) according to claim 17, wherein the entropic coding is a tabled asymmetric numeral systems coding (tANS), and the decompression unit (35) comprises a decoding table (70) of the tabled asymmetric numeral systems coding (tANS).

19. Electronic system for processing object(s), comprising a sensor (15) and an electronic computer (20) connected to the sensor (15), the computer (20) being configured to process at least one object coming from the sensor (15),
wherein the electronic computer (20) is according to any one of claims 15 to 18.
